# EUROPEAN PATENT APPLICATION

(11) **EP 1 614 663 A1**
(43) Date of publication of application: **11.01.2006**
(21) Application number: 04712154.6
(22) Date of filing: 18.02.2004
(51) Int. Cl.: C03B 11/08, C03C 17/22, G02B 3/00, G02B 3/06

(54) **METHOD OF PRODUCING OPTICAL ELEMENT, OPTICAL ELEMENT, AND OPTICAL ELEMENT ARRAY**

(30) Priority: 19.02.2003 JP 2003041653; 19.02.2003 JP 2003041655; 26.02.2003 JP 2003049885
(71) Applicant: MATSUSHITA ELECTRIC INDUSTRIAL CO., LTD., Kadoma-shi, Osaka 571-8501 (JP)
(72) Inventor: SHIMIZU, Yoshiyuki, Hirakata-shi Osaka 573-0071 (JP); MURATA, Jun, Yao-shi Osaka 581-0036 (JP); YOSHIKAWA, Motonobu, Osaka 546-0013 (JP); ASHINO, Atsushi, Kadoma-shi Osaka 571-0014 (JP); NAKAMURA, Shoji, Osaka 573-0073 (JP); RYONAI, Hiroshi, Osaka-shi Osaka 544-0003 (JP); SUNOHARA, Masaaki, Hyogo 662-0835 (JP)
(74) Representative: Schorr, Frank Jürgen
(86) International application number: PCT/JP2004/001774
(87) International publication number: WO 2004/076366

(57) **Abstract**

A method for manufacturing an optical element comprises a step of press molding an optical element material 6 disposed between an upper press head (7) and its paired lower press head (8), wherein in the upper press head (7) and/or the lower press head (8) is formed a groove-like component that forms a non-cylindrical face or a cylindrical face as an optically effective component in the optical element material (6). This makes it possible to obtain an optical element with stable face shape precision, boosts productivity, and is also advantageous in terms of cost.

## Description

### Technical Field

This invention relates to a glass optical element used in a semiconductor laser device or the like, and to a method for manufacturing this element, and more particularly relates to an optical element for a semiconductor laser device used in working machines such as welders and cutting machines that make use of a high-output semiconductor laser, and to a method for manufacturing this element.

### Background Art

An example of proposed technology related to semiconductor laser devices is a device with which the convergence of light radiated from a semiconductor laser array can be increased and the density of light outputted from an optical fiber array can be raised (see Patent Document 1 below, for example).

Optical elements used in such semiconductor laser devices include semi-cylindrical lenses and hyperbolic lenses, for example, and there are also applications in which lenses are stuck together for use. In this case, an ion exchange lens or a polished lens has been used to accommodate the complex shape.

Patent Documents 2 and 3 below propose technology for producing ahead of time an optical element base material in which a translucent material has been worked into a cylindrical and curved surface form, and then drawing this optical element base material in the axial direction to obtain an optical lens of the desired shape.

Furthermore, while not a method for producing an optical element of cylindrical shape, there is also a technique for obtaining an aspherical lens, in which the face with the optical function is asymmetrical to the rotational axis, by using a pair of pressing molds having the opposite shape as the lens shape, and press molding an optical element material at a temperature at which glass softens, to obtain an aspherical lens of the desired shape.

However, the above-mentioned ion exchange lenses and polished lenses are worked individually, one lens at a time, so there is considerable variance in the precision of the surface shape, and this variance greatly affects convergence and coupling efficiency.

Also, although productivity is higher since a semiconductor process is used to produce an ion exchange lens, a problem is that more manufacturing steps are entailed. Further, ununiformity in the composition of a glass material causes a variance in the amount of the ion exchange, which impairs the characteristics of the optical element, depending on its extent.

Furthermore, in order to produce a joined lens, a precisely etched silicon member is required, which makes assembly complicated. A problem encountered with a method for obtaining an optical element by the direct mechanical working of a glass material is that mass productivity is low and there is a variance in the working precision due to tool wear and so forth during working.

Furthermore, the precision of surface shape must be maintained strictly, which means that it is also difficult to ensure a stable shape as the working process takes longer, and this leads to higher manufacturing costs, so the lens ends up being expensive.

With a technique involving drawing as proposed in Patent Document 2, because the cross section in the axial direction of drawing is asymmetrical, there is the danger that strain or twisting will occur, making it difficult to obtain a stable optical function.

Also, with a lens is produced as above, since the entire working face is worked as an optically effective face, a new member must be bonded in order to hold the lens to the device, or a jig must be used for positioning, requiring complex adjustments.

The present invention relates to an optical element array and an optical element that solve these problems encountered in the past, whose surface shape precision is stable, which can be manufactured at high productivity and low cost, and which afford easy position adjustment during manufacture and assembly, and to a manufacturing method for the same.
Patent Document 1
   JP H10·335755A
Patent Document 2
   JP 2002-338281A
Patent Document 3
   JP 2002-338282A

### Disclosure of Invention

It is an object of the present invention to provide a method for manufacturing an optical element, and to provide an optical element array and an optical element, which solves the above problems encountered in the past, with which an optical element can be manufactured with stable surface shape precision, which allows manufacture with high productivity and low cost, and which affords easy position adjustment during manufacture and assembly.

To achieve the stated object, a first method for manufacturing an optical element of the present invention is a method for manufacturing an optical element for a semiconductor laser device, comprising a step of press molding an optical element material disposed between a pair of pressing molds, wherein at least one pressing mold out of the pair is formed with a groove-like component that forms a non-cylindrical face or a cylindrical face as an optically effective component in the optical element material.

A first optical element of the present invention is an optical element for a semiconductor laser device, comprising a non-cylindrical face or a cylindrical face as an optically effective component, wherein the optical element is obtained by press molding an optical element material disposed between a pair of pressing molds, and the non-cylindrical face or cylindrical face is formed by a groove-like component formed in at least one pressing mold out of the pair.

Next, a second method for manufacturing an optical element of the present invention comprises a step of press molding an optical element material disposed between a pair of pressing molds, wherein at least one pressing mold out of the pair is formed with a first groove-like component that forms a non-cylindrical face or a cylindrical face as an optically effective component in the optical element material, and portions that are concave in the depth direction of the groove-like component are formed at locations flanking the region where the first groove-like component is formed.

Next, a second optical element of the present invention is an optical element for a semiconductor laser convergence, formed by cutting an optical element material formed by the above-mentioned second method for manufacturing an optical element, wherein the surface roughness of the cut face produced by the cutting is greater than the surface roughness of the non-cylindrical face or cylindrical face serving as the optically effective component.

A first optical element array of the present invention is an optical element array in which a plurality of optical elements are formed integrally, wherein an optically effective component on which a non-cylindrical face or a cylindrical face is formed, an extension component extending from the optically effective component, and a positioning component formed on the extension component and capable of positioning the optical element array are formed integrally.

A second optical element array of the present invention is an optical element array in which a plurality of optical elements are formed integrally, comprising an optically effective component on which a non-cylindrical face or a cylindrical face is formed, and a groove formed on a face substantially perpendicular to the face where the optically effective component is formed and extending in the lengthwise direction of said substantially perpendicular face.

Next, a third optical element of the present invention is an optical element comprising a non-cylindrical face or a cylindrical face as an optically effective component, wherein an extension component extending from the optically effective component and a positioning component formed on the extension component and capable of positioning the optical element array are formed integrally.

A fourth optical element of the present invention is such that an optically effective component on which a non-cylindrical face or a cylindrical face is formed and a heat radiating component extending from the optically effective component are formed integrally.

A fifth optical element of the present invention is such that the portion other than an optically effective component is a rough face whose surface roughness is greater than that of the optically effective component.

Next, a first method for manufacturing an optical element array of the present invention is a method for manufacturing each of the above-mentioned optical element arrays, wherein the optical element array is molded by pressing an optical element material disposed between a pair of pressing molds.

Next, a third method for manufacturing an optical element of the present invention is a method for manufacturing each of the above-mentioned optical elements, wherein the optical element is molded by pressing an optical element material disposed between a pair of pressing molds.

Next, a fourth method for manufacturing an optical element of the present invention is a method for manufacturing an optical element featuring each of the above-mentioned optical element arrays, wherein the positioning component is used to position the optical element array, after which the optical element array is cut into a plurality of optical elements each including the non-cylindrical face or cylindrical face.

Next, a first method for manufacturing a light source unit of the present invention is such that a plurality of optical elements are produced by cutting the above-mentioned first optical element array so that each includes the optically effective component and the positioning component, and the positioning components of the optical elements obtained by the cutting are used to position other combined optical elements.

The second method for manufacturing a light source unit of the present invention is characterized in that a plurality of optical elements are produced by cutting the above-mentioned second optical element array so that each includes the optically effective component and the groove, and the grooves are filled with an adhesive material to bond plate members at the positions of the grooves, and these plate members are used for joining with other combined optical elements and/or for joining with a light source component.

### Brief Description of Drawings

FIG. 1A is a cross-sectional view illustrating the preheating step in the method for manufacturing the optical element for a semiconductor laser device according to Embodiment 1 of the present invention;
FIG. 1B is a cross-sectional view illustrating the pressing step in the method for manufacturing the optical element for a semiconductor laser device according to Embodiment 1 of the present invention;
FIG. 1C is a cross-sectional view illustrating the cooling step in the method for manufacturing the optical element for a semiconductor laser device according to Embodiment 1 of the present invention;
FIG. 2 is an exploded perspective view of a molding block according to an embodiment of the present invention;
FIG. 3 is an enlarged detail view illustrating a state in which the optical element material according to an embodiment of the present invention has been removed from the lower mold;
FIG. 4A is a perspective view of the molded optical element material according to an embodiment of the present invention;
FIG. 4B is a perspective view of the cut optical element material according to an embodiment of the present invention;
FIG. 5A is a perspective view illustrating light emitted from a semiconductor laser;
FIG. 5B is a perspective view of the positional relationship between the semiconductor laser and optical elements;
FIG. 6A is a perspective view of the molded optical element material according to an embodiment of the present invention;
FIG. 6B is a perspective view of a first example of the cut optical element according to an embodiment of the present invention;
FIG. 6C is a perspective view of a second example of the cut optical element according to an embodiment of the present invention;
FIG. 6D is a perspective view of a third example of the cut optical element according to an embodiment of the present invention;
FIG. 7A is a perspective view of the molded optical element material according to an embodiment of the present invention;
FIG. 7B is a perspective view of the cut optical element according to an embodiment of the present invention;
FIG. 7C is a cross-sectional view illustrating the convergence of light by the optical element shown in FIG. 7B;
FIG. 8A is a perspective view of the upper and lower molds and the optical element material according to an embodiment of the present invention;
FIG. 8B is a perspective view of the molded optical element according to an embodiment of the present invention;
FIG. 9A is a perspective view of the upper and lower molds and the optical element material according to an embodiment of the present invention;
FIG. 9B is a perspective view of the molded optical element according to an embodiment of the present invention;
FIG. 10A is a cross-sectional view illustrating the molding step according to an embodiment of the present invention;
FIG. 10B is a cross-sectional view illustrating the molding step according to a comparative example;
FIG. 11 is an exploded perspective view of a mold block according to an embodiment of the present invention;
FIG. 12A is a diagram illustrating the step of introducing the optical element material in the manufacturing method according to an embodiment of the present invention;
FIG. 12B is a diagram illustrating the state in which the optical element material has been placed in the cavity in the manufacturing method according to an embodiment of the present invention;
FIG. 12C is a diagram illustrating the preheating step in the manufacturing method according to an embodiment of the present invention;
FIG. 12D is a diagram illustrating the pressing step in the manufacturing method according to an embodiment of the present invention;
FIG. 12E is a diagram illustrating the cooling step in the manufacturing method according to an embodiment of the present invention;
FIG. 12F is a diagram illustrating the step of taking out the optical element array in the manufacturing method according to an embodiment of the present invention;
FIG. 13A is a cross-sectional view illustrating a conventional example of eccentricity in the mold;
FIG. 13B is a cross-sectional view of the optical element material molded in the mold shown in FIG. 13A;
FIG. 13C is a plan view illustrating a conventional example of how the optical element material is rolled;
FIG. 13D is a plan view of the optical element material taken out of the mold in FIG. 13C;
FIG. 14A is a perspective view of the optical element array according to an embodiment of the present invention;
FIG. 14B is a perspective view of the optical element array in FIG. 14A as seen from the back;
FIG. 15A is a perspective view of the vapor deposited optical element array according to an embodiment of the present invention;
FIG. 15B is a cross-sectional view of the cutting of the optical element array according to an embodiment of the present invention;
FIG. 15C is a perspective view of the optical element obtained by cutting according to an embodiment of the present invention;
FIG. 16A is a perspective view of a first example of the mold according to Embodiment 8 of the present invention;
FIG. 16B is a perspective view of a second example of the mold according to Embodiment 8 of the present invention;
FIG. 16C is a perspective view of a third example of the mold according to Embodiment 8 of the present invention;
FIG. 16D is a perspective view of a fourth example of the mold according to Embodiment 8 of the present invention;
FIG. 17A is a perspective view of a first example of the mold according to Embodiment 9 of the present invention;
FIG. 17B is a perspective view of a second example of the mold according to Embodiment 9 of the present invention;
FIG. 17C is a perspective view of a third example of the mold according to Embodiment 9 of the present invention;
FIG. 18A is a perspective view of the state prior to combination of the optical element array according to an embodiment of the present invention;
FIG. 18B is a perspective view of the optical element obtained by cutting according to an embodiment of the present invention;
FIG. 19A is a perspective view of the optical element array according to Embodiment 11 of the present invention;
FIG. 19B is a perspective view of the cut optical element according to Embodiment 11 of the present invention;
FIG. 19C is a perspective view of the optical element array according to another example in Embodiment 11 of the present invention;
FIG. 19D is a perspective view of the cut optical element according to another example in Embodiment 11 of the present invention;
FIG. 20A is a perspective view of the optical element array according to Embodiment 12 of the present invention;
FIG. 20B is a perspective view of the optical element array according to another example in Embodiment 12 of the present invention;
FIG. 21A is a perspective view of the optical element array according to Embodiment 13 of the present invention;
FIG. 21B is a perspective view of the optical element array according to another example in Embodiment 13 of the present invention;
FIG. 22A is a perspective view of the optical element array according to Embodiment 14 of the present invention;
FIG. 22B is a perspective view of the cut optical element according to Embodiment 14 of the present invention;
FIG. 22C is a perspective view of how the optical element according to Embodiment 14 of the present invention is combined with another optical element;
FIG. 22D is a perspective view of the completed state of the positional adjustments of the optical elements according to Embodiment 14 of the present invention;
FIG. 23A is a perspective view of how the optical element according to Embodiment 15 of the present invention is combined with another optical element;
FIG. 23B is a perspective view of the completed state of the positional adjustments of the optical elements according to Embodiment 15 of the present invention;
FIG. 24A is a perspective view of the optical element array according to Embodiment 16 of the present invention;
FIG. 24B is a perspective view of the cut optical element according to Embodiment 16 of the present invention;
FIG. 24C is a perspective view of the cut optical element according to another example in Embodiment 16 of the present invention;
FIG. 25A is a perspective view of the optical element array according to Embodiment 17 of the present invention;
FIG. 25B is a perspective view of the cut optical element according to Embodiment 17 of the present invention;
FIG. 25C is a perspective view of the state before a plate has been bonded to the optical element according to another example in Embodiment 17 of the present invention;
FIG. 25D is a perspective view of the state after a plate has been bonded to the optical element according to Embodiment 17 of the present invention;
FIG. 26A is a perspective view of the state in which the optical element according to Embodiment 17 of the present invention has been combined with another optical element;
FIG. 26B is a perspective view of the state in which the optical element according to another example in Embodiment 17 of the present invention has been combined with another optical element;
FIG. 27A is a perspective view of the optical element according to Embodiment 18 of the present invention;
FIG. 27B is a perspective view of the optical element according to another example in Embodiment 18 of the present invention; and
FIG. 27C is a perspective view of the state in which the optical element according to Embodiment 18 of the present invention has been combined with another optical element.

### Description of the Invention

The first method for manufacturing an optical element of the present invention involves press molding an optical element material disposed between a pair of pressing molds, so that an optical element with stable surface shape precision can be obtained, productivity is high, and this is advantageous in terms of cost as well.

Also, the first optical element of the present invention is produced by press molding an optical element material disposed between a pair of pressing molds, so the surface shape precision is stable, productivity is high, and this is advantageous in terms of cost as well.

With the second method for manufacturing an optical element of the present invention, portions that are concave in the depth direction of the groove-like component are formed in the mold at locations flanking the region where the groove-like component is formed, so these concave portions serve to slow or restrict the flow of ends of the optical element material, and prevent eccentricity of the mold during pressing.

With the second optical element of the present invention, the problem of stray light is handled by preventing unnecessary light from being incident on the optical element.

With the first optical element array of the present invention, a positioning component is formed integrally, so when the optical element array is cut into a plurality of optical elements, the positioning component can be used for positioning.

With the second optical element array of the present invention, an optical element in which a groove is formed is obtained by cutting an optical element array, so this groove can be utilized as a reservoir for an adhesive material.

With the third optical element of the present invention, a positioning component is formed integrally, so the positioning component can be used to adjust the positioning with other combined optical elements.

With the fourth optical element of the present invention, a heat radiating component is formed integrally, which is advantageous in terms of heat radiation.

With the fifth optical element of the present invention, a rough face is formed on the portion other than an optically effective component, so the problem of stray light is handled by preventing unnecessary light from being incident on the optical element.

With the first method for manufacturing an optical element array of the present invention, the optical element array is molded by pressing an optical element material disposed between a pair of pressing molds, so surface shape precision is stable, productivity is high, and manufacture is less inexpensive.

With the second method for manufacturing an optical element array of the present invention, the optical element is molded by pressing an optical element material disposed between a pair of pressing molds, so surface shape precision is stable, productivity is high, and manufacture is less inexpensive.

With the third method for manufacturing an optical element of the present invention, a positioning component that is integrated with the optical element array is used for positioning in the cutting of the optical element array, so positioning is easier.

With the first method for manufacturing a light source unit of the present invention, a positioning component that is integrated with the optical element array is used for positioning in the cutting of the optical element array, so positioning is easier.

With the second method for manufacturing a light source unit of the present invention, a groove can be utilized as a reservoir for an adhesive material, which facilitates the bonding of a plate member.

In the first method for manufacturing an optical element of the present invention, the groove-like component preferably comprises a plurality of rows. With this construction, there are a plurality of rows of non-cylindrical face or cylindrical face corresponding to the groove-like component in the molded optical element material, so an optical element array can be obtained from a single optical element material.

It is also preferable if the groove-like component comprises a plurality of rows, and these rows are disposed equidistantly.

It is also preferable if the manufacturing method further comprises a cutting step in which the molded optical element material is cut into a plurality of optical elements after the molded optical element material has been vapor deposited. With this construction, there is no need for vapor deposition after cutting, so there is no need to provide a component for fixing the optical element for vapor deposition.

It is also preferable if the vapor deposition extends to a portion other than the optically effective component.

It is also preferable if the manufacturing method further comprises a cutting step in which the molded optical element material is cut into a plurality of optical elements, the pressing mold in which the groove-like component is formed has a flat component formed adjacent to the groove-like component, and in the cutting step, the molded optical element material is cut so as to leave behind the portion corresponding to the flat component. With this construction, even if chipping should occur during cutting, it can be prevented from spreading to the optically effective component. Also, since there is an extra portion in addition to the optically effective component after cutting, this extra portion can be utilized for fixing to a semiconductor laser device. Accordingly, there is no need to bond a new member for holding the optical element to the device, or to use a jig for positioning, so adjustment is easier in holding the optical element to the device.

It is also preferable if the pressing mold in which the groove-like component is formed has a flat component formed adjacent to the groove-like component, a material having a light-blocking effect and/or a heat-radiating effect is added to the flat component before the optical element material is pressed, and the added material is transferred to the optical element material during the pressing of the optical element material. With this construction, the extra portion formed in addition to the optically effective component can be utilized as a light-blocking component or a heat radiating component.

It is also preferable if the material added to the flat component is at least one material selected from among carbon, graphite, and graphite sheet.

It is also preferable if the pressing mold in which the groove-like component is formed has a flat component formed adjacent to the groove-like component, and the surface roughness of the flat component is increased over the surface roughness of the groove-like component so that, of the molded optical element material, the portion corresponding to the flat component has an optical light-blocking effect. With this constitution, the extra portion formed in addition to the optically effective component can be utilized as a light-blocking component, and there is no need to coat with a powder or apply a sheet before each molding, which is advantageous in terms of productivity.

Next, in the first optical element of the present invention, it is also preferable if a flat component is provided adjacent to the non-cylindrical face or cylindrical face. With this construction, even if chipping should occur during cutting, it can be prevented from spreading to the optically effective component. Also, because there is an extra portion in addition to the optically effective component, this extra portion can be utilized for fixing to a semiconductor laser device. Accordingly, there is no need to bond a new member for holding the optical element to the device, or to use a jig for positioning, so adjustment is easier in holding the optical element to the device.

It is also preferable if a material having a light-blocking effect and/or a heat-radiating effect is added to the flat component. With this construction, the extra portion formed in addition to the optically effective component can be utilized as a light-blocking component or a heat radiating component.

It is also preferable if the material added to the flat component is at least one material selected from among carbon, graphite, and graphite sheet.

It is also preferable if the surface roughness of the flat component is made greater than the surface roughness of the non-cylindrical face or cylindrical face so that the flat component has a light-blocking effect. With this construction, the extra portion formed in addition to the optically effective component can be utilized as a light-blocking component.

In the second method for manufacturing an optical element of the present invention, it is also preferable if a plurality of the groove-like components are arranged at a specific pitch. With this construction, a plurality of optical elements can be obtained by cutting the molded optical element material.

It is also preferable if the concave portions are arranged so as to be either parallel or perpendicular to the axial direction of the groove-like component. With this construction, the second groove-like component can be disposed so as to sandwich the first groove-like component.

It is also preferable if the concave portions are formed with ridgelines formed by intersecting planes. With this construction, the ridgelines can be used as a reference for positional adjustment.

It is also preferable if the concave portions are deeper than the groove-like component. With this construction, a gap can be provided between the optical element material mounting face and a convex component formed corresponding to the groove-like component, without the use of any special jig or the like, so setting is easier during cutting.

It is also preferable if this method further comprises a cutting step in which the molded optical element material is cut into a plurality of optical elements, wherein the cutting step is performed with the molded optical element material disposed on a base, the concave portions are deeper than the groove-like component, of the molded optical element material, a convex component formed corresponding to the concave portion is brought into contact with the base, a space is provided between the base and the non-cylindrical face or cylindrical face formed corresponding to the groove-like component, and the cutting is performed in this state. With this construction, cutting can be performed in a state in which there is a gap between the optical element material mounting face and the convex component formed corresponding to the groove-like component, without the use of any special jig or the like.

It is also preferable if this method further comprises a cutting step in which the molded optical element material is cut into a plurality of optical elements, wherein the concave portions are formed with ridgelines formed by intersecting planes, and the ridgelines are used as a reference for positional adjustment in the cutting. With this construction, since the ridgelines are integrally molded during molding, these ridgelines have high precision as reference positions, so the precision of positional adjustment is higher.

It is also preferable if this method further comprises a cutting step for cutting an assembly of a first optical element material as the molded optical element material, and a second optical element material, wherein the concave portion is deeper than the groove-like component, of the molded optical element material, a convex component formed corresponding to the concave portion is joined to the second optical element material, a space is provided between the second optical element material and the non-cylindrical face or cylindrical face formed as the optically effective component corresponding to the groove-like component, and the cutting is performed in this state. With this construction, good precision can be ensured easily in the space length in the assembly merely by joining the first optical element material and the second optical element material. Also, since good precision in the space length is ensured both before and after cutting, there is no need to adjust the space length precision for each individual optical element after cutting.

In the first optical element array of the present invention, it is preferable if the positioning component is formed in at least one pair of diagonal positions of the two pairs of diagonal positions of the optical element array. With this construction, the optical element array can be positioned both laterally and longitudinally.

It is also preferable if the positioning component is a protrusion protruding from the extension component.

It is also preferable if the positioning component is a rough face whose surface roughness is greater than that of the non-cylindrical face or cylindrical face.

It is also preferable if the positioning component is a notch obtained by notching the extension component.

It is also preferable if a row of protrusions formed from a plurality of protrusions is formed on the extension component, and the positioning component is at least part of the plurality of protrusions. With this construction, protrusions can be left on the plurality of optical elements obtained by cutting, and these protrusions can be used for positional adjustment during combination with other optical elements.

It is also preferable if a heat radiating component extending so as to increase the width of the optical element array is further formed adjacent to the extension component.

It is also preferable if the positioning component is formed on a face on the opposite side from the face where the non-cylindrical face or cylindrical face is formed, and the inner face is a plurality of concave components corresponding to a non-cylindrical face or a cylindrical face. With this construction, concave components can be left on the plurality of optical elements obtained by cutting, and these concave components can be used for positional adjustment during combination with other optical elements.

In the third optical element of the present invention, it is preferable if the positioning component is a protrusion protruding from the extension component.

It is also preferable if the positioning component is a rough face whose surface roughness is greater than that of the non-cylindrical face or cylindrical face.

It is also preferable if a heat radiating component extending so as to increase the width of the optical element array further is formed adjacent to the extension component.

In the fourth optical element of the present invention, it is preferable if the heat radiating component is thinner than the optically effective component. This construction is advantageous for thermal radiation.

In the first method for manufacturing a light source unit of the present invention, it is preferable if the positioning component is formed on a face on the opposite side from the face where the non-cylindrical face or cylindrical face is formed, and the inner face is a plurality of concave components corresponding to a non-cylindrical face or a cylindrical face, and positioning with other combined optical elements is performed by combining the concave components on a non-cylindrical face or a cylindrical face of the other optical elements. With this construction, positioning will be easier if the shape of the concave components is made to correspond to the shape of the convex components of the other optical elements being combined.

### Embodiment 1

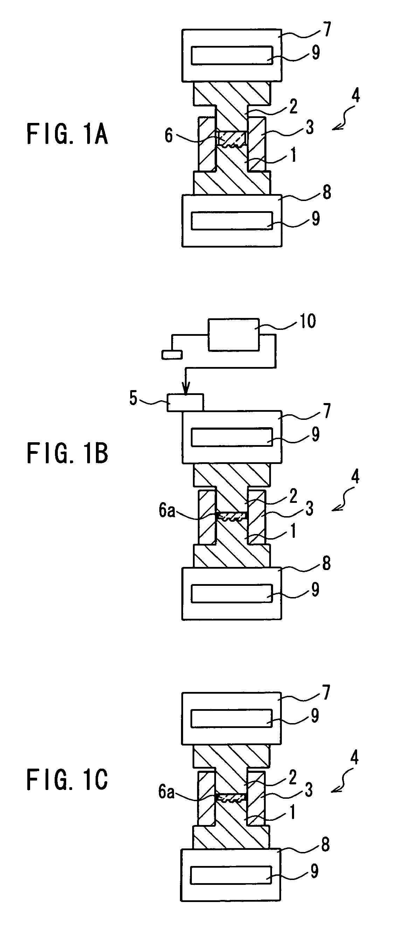

The drawings in FIG. 1 are cross-sectional views illustrating steps in the method for manufacturing the optical element for a semiconductor laser device according to Embodiment 1. A molding-use mold block 4 according to this embodiment comprises a collar mold 3 and pressing molds including of a lower mold 1 and an upper mold 2. A preheating stage, pressing stage, and cooling stage are disposed in the molding apparatus, and a mechanism (not shown) is provided for successively transporting this three-piece mold block 4 to each of these stages.

The settings of temperature T and pressing pressure P at the preheating stage, pressing stage, and cooling stage, respectively, are setting 1 (preheating temperature T1 and pre-pressing pressure P1), setting 2 (pressing temperature T2 and pressing pressure P2), and setting 3 (cooling temperature T3 and cooling pressure P3). The temperature T is adjusted by adjusting the amount of heat generated by a heater 9, which is a heating means built into an upper press head 7 and a lower press head 8 (which are pressing means), and the pressing pressure P is adjusted by adjusting the pressure applied by the upper and lower press heads 7 and 8.

A displacement sensor 5 is installed on the pressing stage, and a computer-equipped sequencer 10 is provided as a control device.

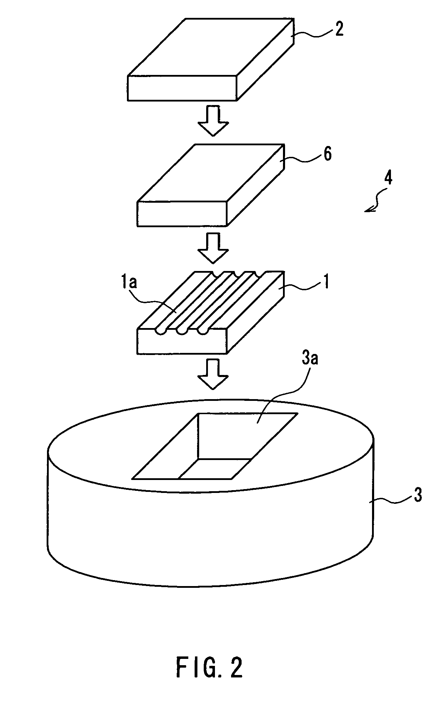

FIG. 2 is an exploded perspective view of the mold block 4. An optical element material 6 is disposed between the lower mold 1 and the upper mold 2. An opening 3a is formed in the collar mold 3, and during molding, as shown in FIG. 1A, the optical element material 6 is sandwiched between the distal end of the lower mold 1 and the distal end of the upper mold 2 inside the collar mold 3. Only the distal ends of the lower mold 1 and upper mold 2 are shown in FIG. 2.

A groove-like component 1a is formed in the lower mold 1, and the shape of the groove-like component 1a is such that the inner face shape corresponds to non-cylindrical face or cylindrical face. Accordingly, the non-cylindrical face or cylindrical face is transferred to the optical element material 6.

As shown in FIG. 1A, the mold block 4 is sandwiched between the upper press head 7 and the lower press head 8. With the lower press head 8 resting on each stage, pressure is applied to the mold block 4 by the upper press head 8, thereby pressing on the optical element material 6. More specifically, pressure is applied to the optical element material 6 by squeezing the upper mold 2 and the lower mold 1 closer together while sliding the outer peripheral face of the upper mold 2 along the inner peripheral face of the collar mold 3.

The steps will now be described in order through reference to FIGS. 1A to 1C. First, as shown in FIG. 1A, the optical element material 6 is placed on the lower mold 1, so that the optical element material 6 is disposed in a cavity bounded by the upper face of the lower mold 1, the lower face of the upper mold 2, and the inner peripheral face of the collar mold 3. In this state the mold block 4 is preheated at the preheating stage.

In this embodiment, the optical element material 6 is a sheet of polished borosilicate glass (glass transition point Tg = 520°C), measuring 9.5 mm wide, 14.5 mm long, and 1 mm thick. The preheating temperature T1 is set to at least 560°C (such as 600°C) because that is the glass yield point At, and the prepressing pressure P1 is set to 9.8 × 10⁷ N/m². Under these settings, the material is transported onto the pressing stage at a specific timing (t = 100 seconds), and the process moves to the pressing step in FIG. 1B (the next step).

In the pressing step in FIG. 1B, the mold block 4 is heated while pressure is applied to the upper mold 2 by the upper press head 7, causing the optical element material 6 to deform and molding an optical element array 6a. The pressing temperature T2 is set to 580°C, for example, and the pressing pressure P2 is set to 9.8 × 10⁹ N/m², for example. After the molding of the optical element array 6a, it is transported onto the cooling stage, and the process moves to the cooling step in FIG. 1C (the next step).

In the cooling step in FIG. 1C, the mold block 4 is cooled, so that the molded optical element array 6a also is cooled. In this cooling step, the material solidifies while the shape of the optical element effective transfer faces worked at the upper mold 2 and the lower mold 1 is transferred to the optical element material. Accordingly, the material is cooled to the cooling temperature T3 while being pressed at a specific cooling pressure P3. The cooling pressure P3 is set to 4.9 × 10⁹ N/m², for example, and the cooling temperature T3 is set to 515°C, for example, which is under the glass transition point.

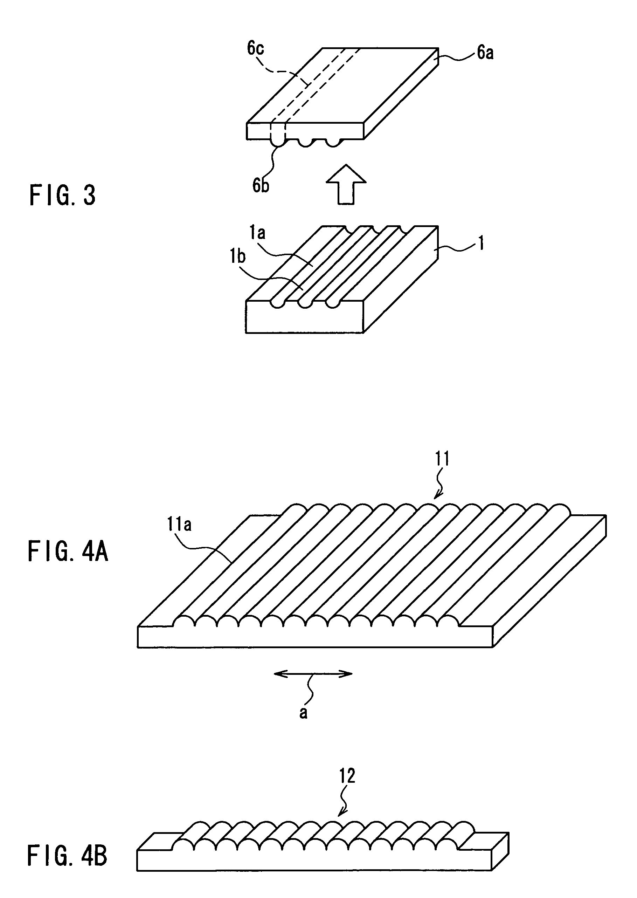

Once the optical element array 6a reaches a temperature under the glass transition point, the press is opened (the pressure released) and the optical element array 6a is taken out of the cavity. FIG. 3 is an enlarged detail perspective view illustrating a state in which the optical element array 6a has been removed from the lower mold 1. The molded optical element array 6a has been given the shape of the groove-like component 1a of the lower mold 1, forming three non-cylindrical faces 6b.

The interior of the molding machine chamber is replaced with an N₂ reductive atmosphere to prevent the oxidation of the mold. This reduces adhesion between the optical element material and the mold transfer faces, making it easier to take the optical element array 6a out of the cavity.

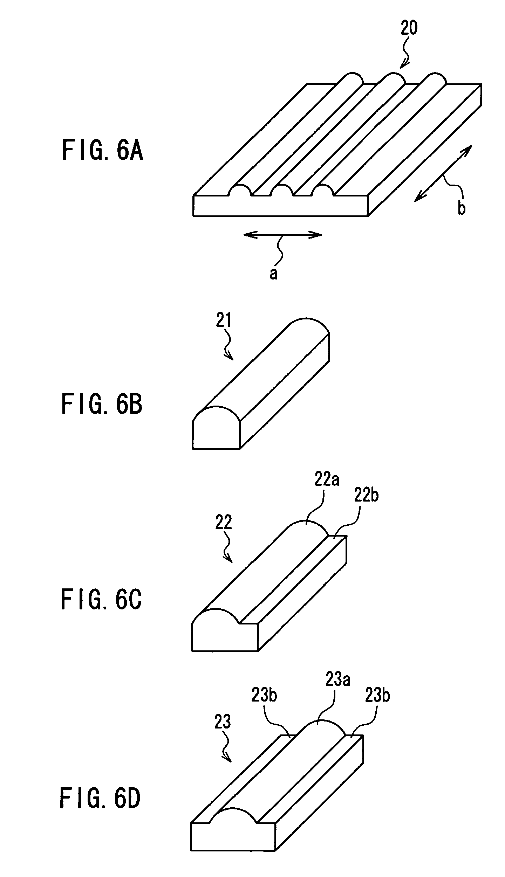

In this embodiment, the optical element array 6a is a substantially rectangular block (10 x 15 mm) with a thickness of 0.8 mm. The desired optical elements (see FIG. 6B) can be obtained by cutting the optical element array 6a so as to include the various non-cylindrical faces, such as along the broken lines 6c. The performance of these optical elements was checked, which revealed good optical performance (convergence).

FIGS. 4A and 4B are perspective views illustrating other examples of the cutting of the optical elements. FIG. 4A is a perspective view of an optical element array 11 that has been molded using a different pressing mold. The optical element array 11 shown in this drawing comprises a plurality of semi-cylindrical convex components 11a arranged in the direction of arrow a (perpendicular to the lengthwise direction of the convex components 11a). An optical element 12 shown in FIG. 4B is produced by cutting the optical element array 11 in FIG. 4A at a specific width in the direction of arrow a.

An example of molding by using three stages was described in this embodiment, but a single stage may be used instead.

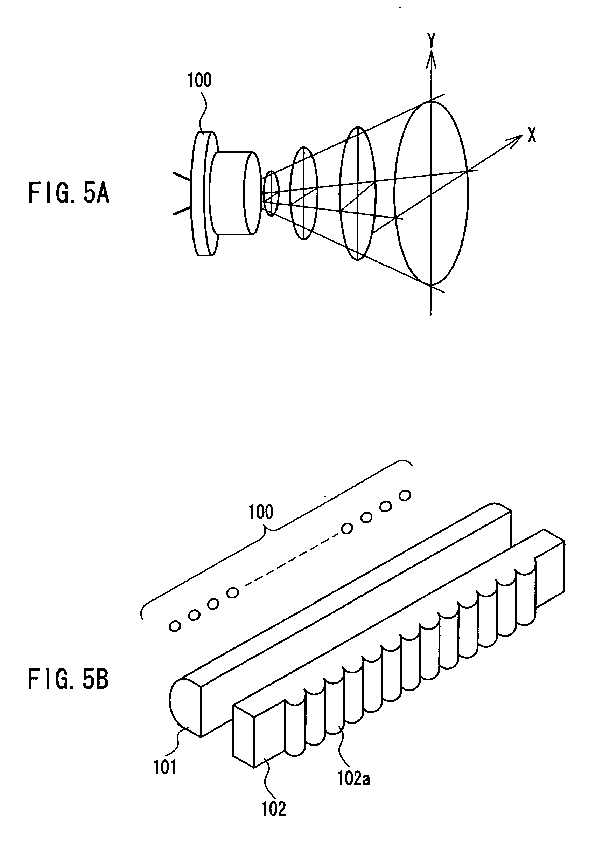

FIG. 5A is a perspective view illustrating light emitted from a semiconductor laser. The spreading angle of the light emitted from a semiconductor laser 100 is greater in the Y axial direction (fast direction) than in the X axial direction (slow direction) perpendicular thereto. FIG. 5B is a perspective view of the positional relationship between semiconductor lasers 100 and optical elements 101 and 102. As shown in the drawing, when light is emitted from a plurality of semiconductor lasers 100, in the Y axial direction, the spread of light can be corrected to parallel or converged by the optical element 101 having a cylindrical face. In the X axial direction, the spread of light can be corrected to parallel or converged by the optical element 102 that is equipped with a plurality of cylindrical faces 102a corresponding to the various semiconductor lasers 100. In this case, it is known that it is good to utilize a non-cylindrical face in order to eliminate astigmatism (variance in convergence) at the various cylindrical faces of the optical element.

Face shape precision is critical for both cylindrical and non-cylindrical faces, and in the production of non-cylindrical faces, it was extremely difficult to minimize the variance in working precision by mechanical working, adhesive application, or another such method. In contrast, with a manufacturing method in which non-cylindrical faces are transferred to a glass face using a mold that first has been worked to a specific shape, as in this embodiment, there is less variance in working precision and the face shape precision can be better stabilized than with mechanical working, adhesive application, or another such method. Furthermore, the productivity is excellent, so this is advantageous in terms of manufacturing cost as well. Accordingly, this embodiment is particularly useful in the manufacture of an optical element having a non-cylindrical face.

The optical element 101 shown in FIG. 5B can be obtained by the cutting shown in FIG. 3, and the optical element 102 can be obtained by the cutting shown in FIG. 4.

### Embodiment 2

Embodiment 2 is similar to the situation described in Embodiment 1 above, but relates in particular to the material and working of the mold. In this embodiment, convergence was enhanced by using K·PSFn3 (made by Sumita Optical Glass, Tg = 477°C, At = 515°C), which is a high-refraction material (nd = 1.83917), as the optical element material.

The working of the mold for molding the non-cylindrical faces can be accomplished by running a rotating whetstone in a linear direction with respect to the mold base material while subjecting the coordinates in the perpendicular direction to NC control. In this case, the working environment, the material of the whetstone, the working conditions, and other such conditions can be adjusted in order for the optical element to have the desired surface roughness, and to keep the non-cylindrical face shape error to 0.1 µm or less. Also, after the shape has been finalized, a polishing tool may be used to improve the surface roughness and obtain a mirror finish.

The material of the mold is preferably WC (carbide) or a ceramic such as SiC that will give a mirror finish after working and be able to withstand the temperature during molding. SUS or the like also may be used as a less expensive material. Also, glassy carbon or the like may be used to reduce, if only slightly, the reaction with the glass during molding. The mold may also be based on some kind of ceramic or metal, and have a thin film of a metal, carbon, or the like formed on its surface. For instance, a film of carbon (DLC) may be applied to a carbide material and used as the mold.

### Embodiment 3

Embodiment 3 relates to the cutting of the molded optical element material. FIG. 6A is a perspective view of an optical element array 20 prior to cutting. FIG. 6B shows an optical element 21 that has been cut. The optical element 21 is obtained by cutting the optical element array 20 in the lengthwise direction of the cylindrical or non-cylindrical face (the direction of arrow b), and when viewed perpendicular to the cutting direction (the direction of arrow a), this is an example of cutting that leaves only the optically effective component (the cylindrical or non-cylindrical face).

In this case, it is preferable if the process moves to the vapor deposition step in the uncut state shown in FIG. 6A, and vapor deposition is completed in an uncut state. This is because if vapor deposition is performed after cutting, the retainer component used for fixing the optical element (the ends in the lengthwise direction of the optical element 21) will end up not being vapor deposited.

FIG. 6C is a perspective view of an optical element 22 according to an example in which an extra portion 22b (flat component) is left after cutting. The cutting may be such that just the optically effective component is left as shown in FIG. 6B, but depending on the cutting method, there are times when chipping may occur in the optically effective face. Two ways to deal with this are to prevent chipping by providing an adhesive layer, and to polish (lap) the cut face.

In the example in FIG. 6C, since the extra portion 22b is left behind after cutting, even if chipping should occur, it will not spread to the optically effective face 22a. Also, the extra portion 22b can be utilized as a fixing portion when the optical element is used as a constituent part of a semiconductor laser device. Accordingly, there is no need to bond a new member for holding the optical element to the device, or to use a jig for positioning, so adjustment is easier in holding the optical element to the device.

FIG. 6D is a perspective view of an optical element 23 according to another example in which the cutting leaves behind an extra portion. In the example shown here, an extra portion 23b (flat component) is left on both sides of the optically effective face. This cutting method effectively prevents any chipping from spreading to the optically effective face 23a. The extra portion 23b also can be utilized as a fixing portion, which is the same as the construction in FIG. 6C.

### Embodiment 4

Embodiment 4 is similar to the situation described in Embodiment 3, but involves utilizing the extra portion as a light-blocking component or heat radiating component. The lower mold 1 shown in FIG. 3 is equipped with a groove-like component 1a corresponding to the optically effective face, and a flat component 1b corresponding to the extra portion. In this embodiment, the flat component 1b is coated ahead of time with graphite powder, and glass transfer is performed in this state. With this method, the graphite powder fuses to the glass surface simultaneously with glass transfer, so the molded optical element is obtained with a flat side that does not transmit light.

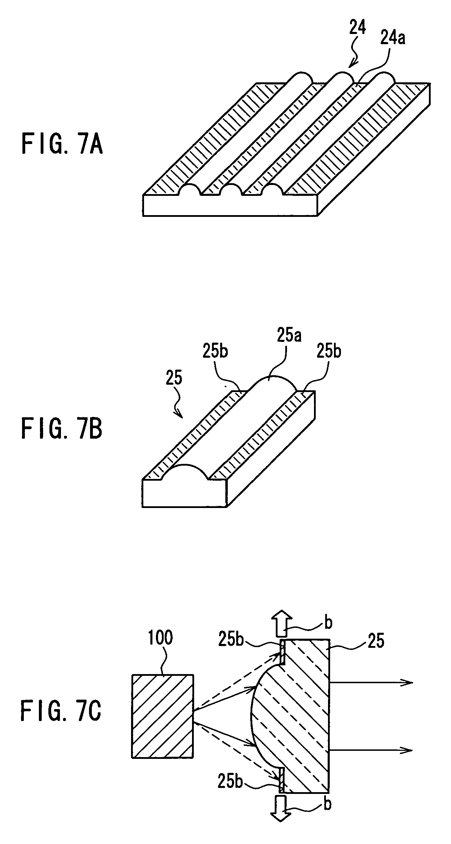

FIG. 7A is a perspective view of a molded optical element array 24. Graphite powder is fixed to the glass surface (hatched area) on a flat component 24a corresponding to the flat component 1b of the lower mold 1. The optical element 25 shown in FIG. 7B is obtained by cutting the optical element array 24 in FIG. 7A. The optical element 25 is provided with an extra portion 25b (hatched area) where graphite powder is fused in addition to the optically effective portion 25a.

FIG. 7C shows how light from the semiconductor lasers 100 is converged by the optical element 25 shown in FIG. 7B. The emitted light indicated by the arrows corresponds to light that has spread out in the Y direction in FIG. 5A. Since the extra portion 25b is a flat surface that does not transmit light, the transmission of light outside the optically effective diameter can be prevented, as shown by the broken-line arrows. Accordingly, any stray light or other unwanted light is absorbed, resulting in better convergence. Also, graphite has better thermal conductivity than glass, so any heat accumulated as a result of scattered light can be released in a specific direction (the direction of arrow b in the example in FIG. 7C), which means that the extra portion 25b has a light-blocking effect and heat radiating effect at the same time. Therefore, when this optical element is used in a semiconductor laser working machine or other such device, the quality of that device will be improved.

The surface roughness of the flat component 1b of the lower mold 1 in FIG. 3 may be increased over the surface roughness of the groove-like component 1a, and this increased surface roughness transferred to the glass material so as to obtain a light-blocking effect. With this method, there is no need to coat with a powder or apply a sheet before each molding, which is advantageous in terms of productivity.

An example of graphite powder was described as the material added to the extra portion of the optical element, but other materials may be used instead, and any material that has a light-blocking effect or a heat-radiating effect may be used, although it is preferable to use a material that has both a light-blocking effect and a heat-radiating effect. For example, a powder of carbon may be used instead of a powder of graphite, and the material is not limited to being in the form of a powder, and may be an isosterically sintered graphite sheet.

### Embodiment 5

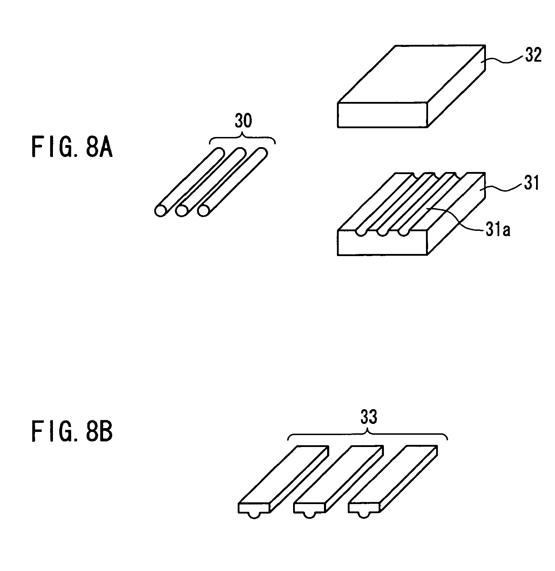

Embodiment 5 relates to the shape of the optical element material. FIG. 8(a) is a perspective view of an unmolded optical element material 30, a lower mold 31, and an upper mold 32. In Embodiment 1, the optical element material was a sheet of glass, but the optical element material 30 in this drawing consists of rods of glass. These optical element materials 30 are disposed corresponding to a groove-like component 31a in the lower mold 31 and molded, which gives optical elements 33 as shown in FIG. 8B. With this embodiment, a single molding operation produces a plurality of optical element materials 30 whose optically effective components are separated, so there is no need for a cutting step.

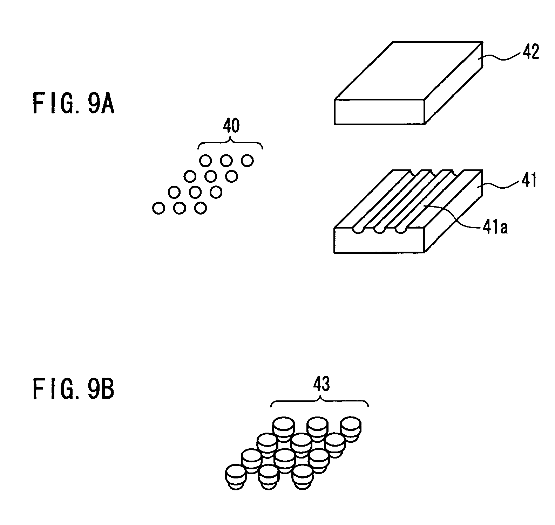

FIGS. 9A and 9B are examples in which an optical element material 40 is in the form of spherical glass balls. FIG. 9A is a perspective view of an unmolded optical element material 40, a lower mold 41, and an upper mold 42. If the balls of optical element material 40 are disposed to be lined up in the groove-like component 41a of the lower mold 41 and molded, the result is the optical elements 43 shown in FIG. 9B. Again in this embodiment, a plurality of optical element materials 43 are obtained with separated optically effective components in a single molding operation.

### Embodiment 6

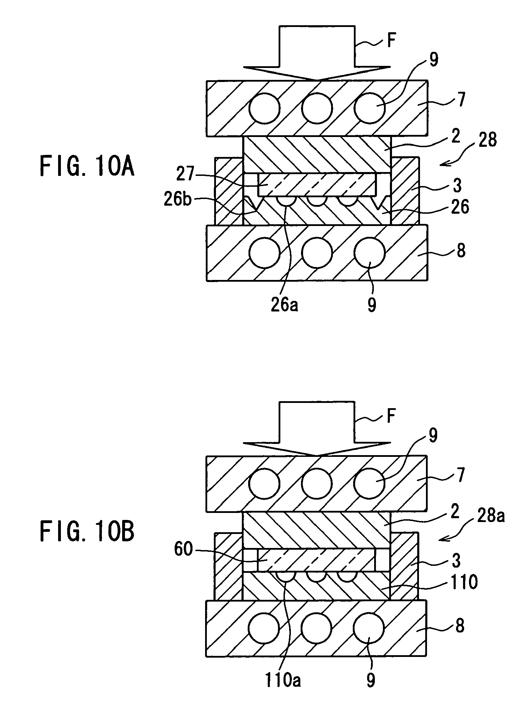

FIG. 10A is a diagram of the construction of the molding device according to Embodiment 6. Those components that are the same as in FIGS. 1A to 1C are numbered the same and will not be described again in detail. The construction in FIG. 10A differs in the construction of the lower mold 26, but the operation of the molding device is the same as with the construction in FIGS. 1A to 1C. Specifically, the application of a pressing force F squeezes the upper mold 2 and the lower mold 26 closer together while sliding the outer peripheral face of the upper mold 2 along the inner peripheral face of the collar mold 3, and this pressure deforms the optical element material 27.

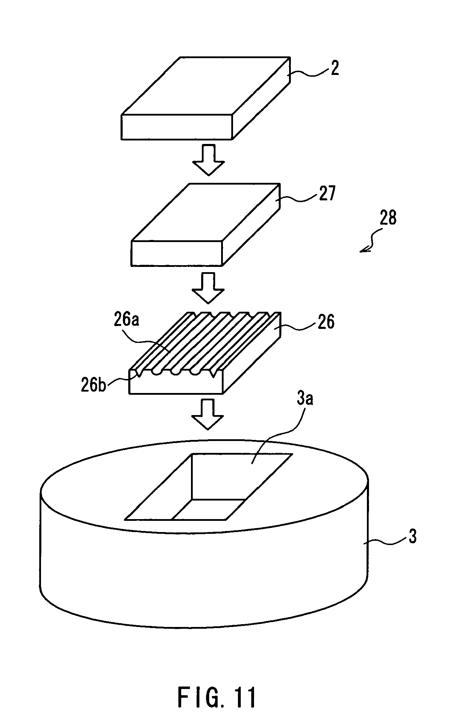

FIG. 11 is an exploded perspective view of a mold block 28. Again in the construction in this drawing, other than the construction of the lower mold 26 being different, everything is the same as in the construction of the mold block 4 in FIG. 2. Specifically, during molding, the optical element material 27 is sandwiched in between the distal end of the lower mold 26 and the distal end of the upper mold 2 inside the collar mold 3.

In the lower mold 26 are formed a groove-like component 26a and second groove-like component 26b that flanks the groove-like component 26a on both sides and is a portion recessed in the depth direction of the groove-like component 26a. The second groove-like component 26b is formed in the lengthwise direction of the groove-like component 26a so as to flank the region in which the groove-like component 26a is formed. The groove-like component 26a is the portion where the optically effective component is formed, and the inner surface shape of the groove-like component 26a corresponds to a non-cylindrical face or cylindrical face. Accordingly, a non-cylindrical face or cylindrical face is transferred to the optical element material 27 corresponding to the groove-like component 26a.

This will be described in detail below, but the second groove-like component 26b is the portion into which flows the optical element material 27 moving to the inner peripheral face side of the collar mold 3 as a result of the pressure. In the example in this drawing, a convex shape having an inclined face with a substantially V-shaped cross section is formed in the optical element material 6 corresponding to the second groove-like component 26b. This convex shape is not a portion utilized as the optically effective component.

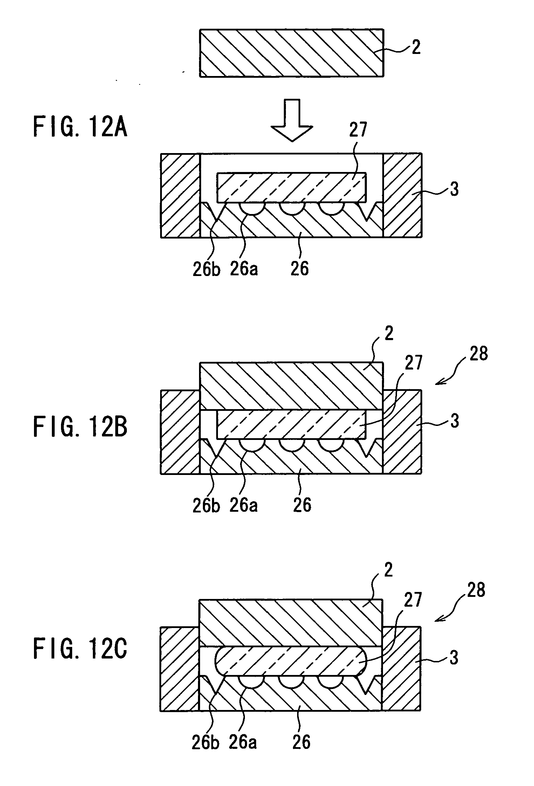

The procedure will now be described through reference to FIGS. 12A to 12F. First, as shown in FIG. 12A, the optical element material 27 is placed on the lower mold 26, so that, as shown in FIG. 12B, the optical element material 27 is disposed in a cavity bounded by the upper face of the lower mold 26, the lower face of the upper mold 2, and the inner peripheral face of the collar mold 3. The optical element material 27 is, for example, a sheet of polished borosilicate glass (glass transition point Tg = 520°C).

FIG. 12C shows the preheating step, in which the mold block 28 is heated by the heater 9 (FIG. 10). The preheating temperature is set to at least the glass yield point, and a specific prepressing pressure is applied.

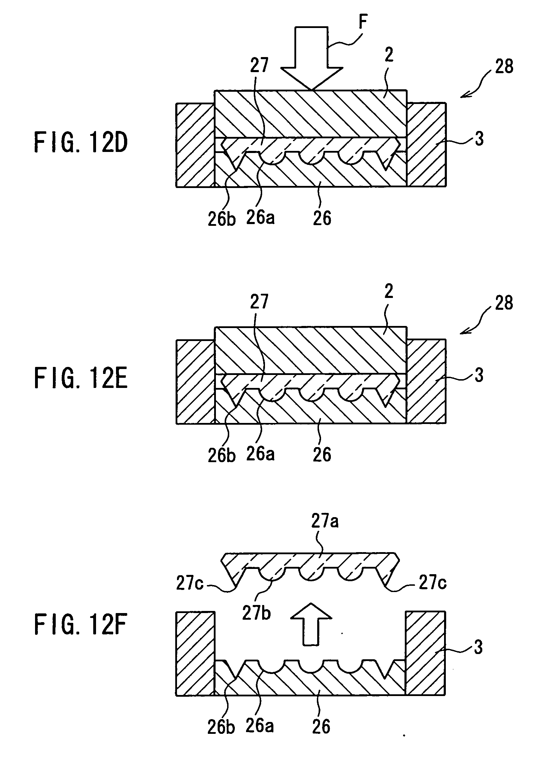

FIG. 12D shows the pressing step, in which the mold block 28 is heated while a pressing force F is applied to the upper mold 2, causing the optical element material 27 to deform. This pressure forces the optical element material 27 into the groove-like component 26a and molds the optical element material 26 into a shape corresponding to the groove-like component 26a (cylindrical face or non-cylindrical face). The pressure also spreads out the optical element material 27 in the lateral direction, and the optical element material 27 also flows into the second groove-like component 26b with a substantially V-shaped cross section.

FIG. 12E shows the cooling step, in which the mold block 28 is cooled, so the molded optical element material 27 also is cooled. In this cooling step, the material solidifies while the shape worked by the upper mold 2 and the lower mold 26 is transferred to the optical element material 27. Accordingly, the material is cooled to the cooling temperature while being pressed at a specific cooling pressure.

FIG. 12F shows the step of removing the optical element array. Once the optical element material 27 reaches a temperature under the glass transition point in the cooling step, the press is opened (the pressure released) and the optical element array is taken out of the cavity. FIG. 12F shows the state when the optical element array 27a has been removed from the lower mold 26. The molded optical element array 27a has been given the shape of the groove-like component 26a of the lower mold 26, forming three convex components 26b of non-cylindrical faces or cylindrical faces. Also, the shape of the groove-like component 27b is transferred, forming convex components 27c having inclined faces with a substantially V-shaped cross section on both sides of the convex components 27b.

This embodiment now will be described in more specific terms through reference to a comparative example. FIG. 10B is a diagram of the construction of a molding device according to a comparative example. The construction in this drawing is the same as that in FIG. 10A, except that the construction of the lower mold 110 is different from the construction of the lower mold 26 shown in FIG. 10A.

The lower mold 110 shown in FIG. 10B has formed in it a groove-like component 110a that forms an optically effective component, and a specific distance is maintained between the inner walls of the collar mold 3 and the groove-like component 110a at both ends. The reason for thus maintaining a specific distance is to prevent the optical element material from coming into contact with the inner walls of the collar mold 3 during pressing. The portions near the ends of the lower mold 110 have lower transfer precision than the middle portion, so the groove-like component 110a for forming the optically effective component is not formed in these portions.

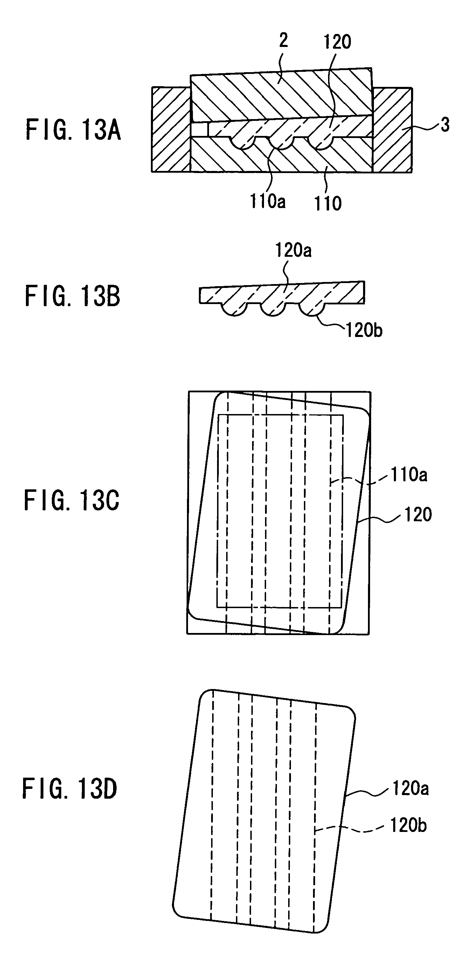

The molding steps are the same as the steps described using FIGS. 12A to 12F, with the only difference being in the state in which the optical elements are molded. This difference will be described through reference to FIG. 13. FIG. 13A shows the pressing step according to a comparative example, and corresponds to the pressing step in FIG. 12D. This pressure forces the optical element material 120 into the groove-like component 110a while spreading it out laterally. In this case, the optical element material 120 is not limited to spreading out uniformly in the lateral direction, and there may be cases in which it spreads out in a state of non-uniform thickness on both sides of the optical element material 120.

As discussed above, the outer peripheral face of the upper mold 2 is designed to slide over the inner peripheral face of the collar mold 3, so there is a slight clearance between the inner peripheral face of the collar mold 3 and the outer peripheral face of the upper mold 2. Consequently, if the thickness is not uniform on both sides of the optical element material 120, the center axis of the upper mold 2 becomes tilted, resulting in eccentricity of the upper mold 2. FIG. 13A illustrates a state in which the upper mold 2 is eccentric, and FIG. 13B is a cross-sectional view of the optical element array 120a that has been removed from the lower mold 110.

FIG. 13C shows how the optical element material 120 is spread out in plan view. The optical element material 120 prior to spreading is indicated by the one-dot chain line. FIG. 13D is a plan view of the optical element array 120a after being removed from the lower mold 110.

If there is an inclined face after molding, as with the optical element array 120a shown in FIG. 13B, the product will not possess the precision required of an optical element. Also, if the optical element array 120 extends all the way to the inner peripheral face of the collar mold 3, as in FIG. 13A, not only will it be difficult to remove the optical element array 120 from the mold, but there will be flash on the optical element array 120a after molding.

Furthermore, if the outer peripheral edge is inclined with respect to the axial direction of the concave component 120b, as in FIG. 13D, there will be no reference for positioning when the array is cut into a plurality of optical elements, making it difficult to adjust the position during cutting.

In contrast, with the construction of this embodiment, in the process from FIG. 12C to FIG. 12E, the spread-out optical element material 27 flows along the inclined faces of the groove-like component 26b, which has a substantially V-shaped cross section, and fills in this groove-like component 26b. Specifically, the role of the groove-like component 26b is to slow down the flow of the optical element material 27, which minimizes the variance in the flow at the ends of the optical element material 27.

For the optical element material 27 to go past the groove-like component 26b and spread farther in the lateral direction, the optical element material 27 must first fill up the groove-like component 26b, so the flow of the optical element material 27 is restricted by the groove-like component 26b. This also serves to prevent variance in the flow at the ends of the optical element material 27. Specifically, providing the groove-like component 26b suppresses variance in the lateral flow of the optical element material 27 while pressing proceeds, so this is advantageous for preventing the eccentricity of the upper mold 2, and also prevents contact with the collar mold 3.

As discussed above, in this embodiment a groove-like component is formed at the portion near the ends of the mold where transfer precision is lower than in the center, that is, the portion not used in the transfer of the optically effective component, and this prevents eccentricity in the upper mold 2. Accordingly, the portion where the shape of the groove-like component 26b is transferred is not used as an optically effective component, so there are no particular problems with transfer precision in this portion.

The shape of the groove-like component 26b provided separately from the groove-like component 26a corresponding to the optically effective component was described above using the example of a V-shaped cross section, but is not limited to this, and may be any shape that is recessed in the depth direction of the groove-like component 26a. For instance, it may have a substantially U-shaped cross section, a substantially arc-shaped cross section, or a substantially open-box-shaped cross section.

Also, in the example described above, the lengthwise direction of the groove-like component 26b was parallel to the lengthwise direction (axial direction) of the groove-like component 26a, but the lengthwise direction of the groove-like component 26b instead may be perpendicular to the lengthwise direction of the groove-like component 26a. In this case, the groove-like component 26b is formed so as to flank the groove-like component 26a formation region, at the ends in the lengthwise direction of the groove-like component 26a.

This embodiment involves a construction that is advantageous for preventing eccentricity in the upper mold, but if eccentricity can be prevented by operational settings, precision of mold fit, or the like, then the construction corresponding to the groove-like component 26b need not be provided separately, just as in Embodiment 1.

### Embodiment 7

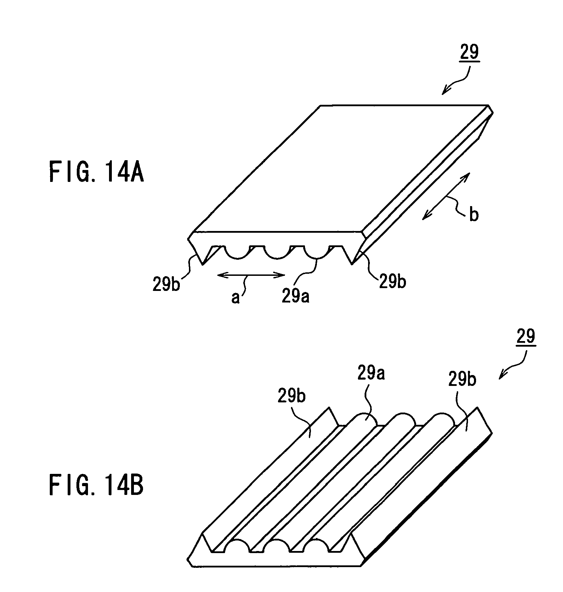

Embodiment 7 relates to the cutting of the optical element array. FIG. 14 includes perspective views of an optical element array after molding. The optical element array 29 in the drawings of FIG. 14 are both the same, with FIG. 14B show the back side in FIG. 14A reversed to the front side. The optical element array 29 in these drawings comprises a plurality of convex components 29a (the optically effective component) having a non-cylindrical face or a cylindrical face.

Convex components 29b having inclined faces with a substantially V-shaped cross section are formed on either side of the convex components 29a. The construction in these drawings corresponds to the optical element array formed using the lower mold 26 in Embodiment 6 above. In the lower mold 26, if the depth of the second groove-like component 26b is greater than the depth of the groove-like component 26a, the distal end position of the convex components 29b on the two sides will be higher than the distal end position of the convex components 29a. Because the optical element array 29 has a plurality of the convex components 29a (the optically effective component), a plurality of optical elements are obtained by cutting in the lengthwise direction of the convex components 29a (the direction of arrow b) so as to include each of the convex components 29a.

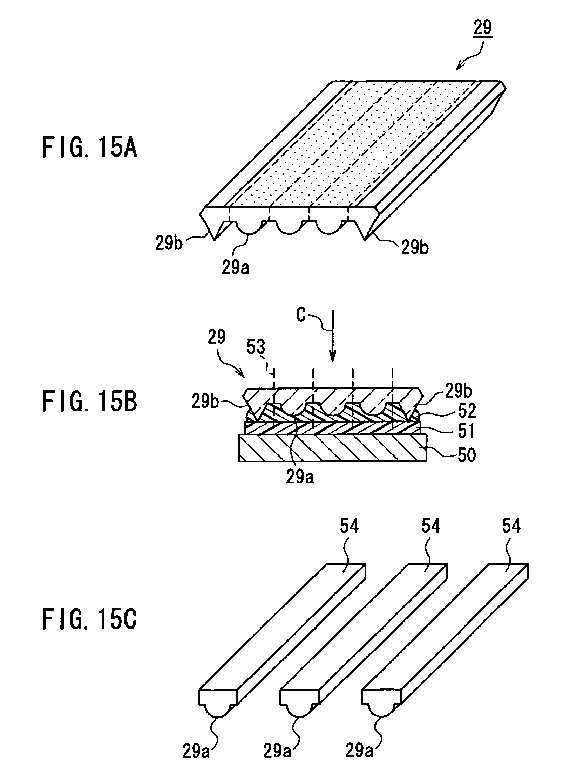

The cutting of the optical element array will be described through reference to FIG. 15. FIG. 15A is a perspective view of the state when an antireflective film has been vapor deposited. The shaded portion is the antireflective film, which is formed on both sides of the optical element array. FIG. 15B is a cross-sectional view of the state when the optical element array 29 has been placed on a stage 50. A base 51 of silicon material, for example, is stuck onto the stage 50. The optical element array 29 is fixed to the base 51 by a wax or other adhesive agent 52. The position of the stage 50 can be adjusted by a drive means (not shown).

Since the distal end position of the convex components 29b on both sides is higher than the distal end position of the convex components 29a, only the distal ends of the convex components 29b touch the base 51, forming a gap between the convex components 29a and the surface of the stage 50. This makes it possible to cut the optical element array 29 without the optical function component coming into contact with the base 51.

Because the convex components 29b of the optical element array 29 have inclined faces with a substantially V-shaped cross section, a ridgeline at which the inclined faces intersect is formed at the distal end of each of the convex components 29b. Even though the optical element array 29 is a transparent material, the ridgeline can be recognized as a line. Accordingly, when the flat component of the optical element array 29 is observed under a microscope in the direction of arrow c, the optical element array 29 can be positioned by adjusting the position of the stage 50 while looking at the ridgeline.

Once this positioning is complete, the optical element array 29 is cut at the locations indicated by the broken lines in FIG. 15B by using a plurality of cutters 53, also indicated by the broken lines in FIG. 15B. This cutting also includes a portion of the adhesive agent 52 and the base 51. After cutting, the adhesive agent 52 is melted and washed away to obtain a plurality of optical elements 54 as shown in FIG. 15C.

As discussed above, since the optical element array 29 is cut in a state in which the positional precision with respect to the cutters is ensured, this also ensures the dimensional precision of the optical element array 29 obtained by cutting.

The surface roughness of the side faces in the lengthwise direction of the optical elements 54 (that is, the cut faces) is preferably greater than the surface roughness of the convex components 29a serving as the optically effective component. Making the side faces rough prevents unwanted light from being incident on the optical element, and therefore avoids stray light. This construction is particularly useful when the product is used as an optical element for semiconductor laser convergence. The surface roughening can be accomplished by adjusting the fineness of the cutter blade.

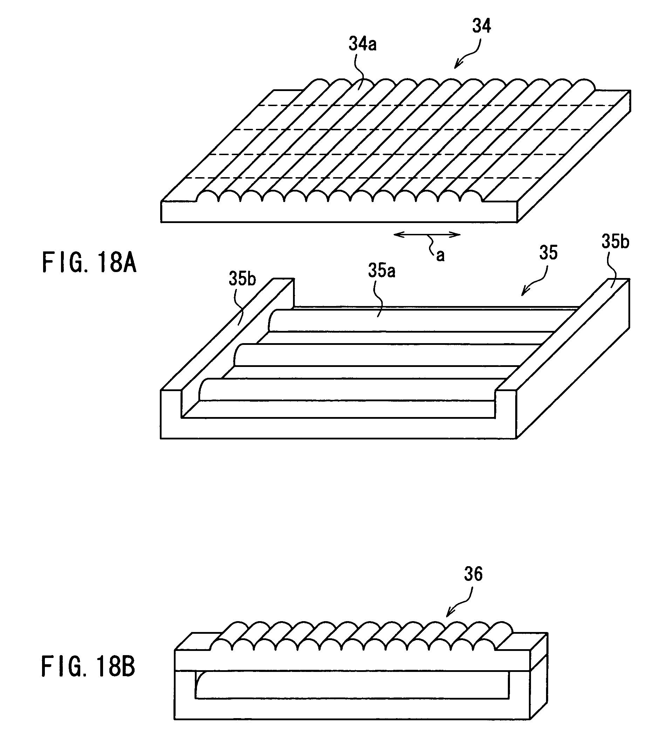

How the ridgeline is used as the reference for positional adjustment is not limited to the example given in this embodiment, and it may be used as a reference for positional adjustment in the assembly of two optical element arrays. For example, it can be utilized in the assembly of two optical element arrays in which the axial directions of cylindrical faces are perpendicular to one another (see FIG. 18). In this case, the precision of the perpendicularity of the cylindrical faces of the two optical element arrays can be ensured by forming ridgelines on both of the optical element arrays, and performing positional adjustment so that the two ridgelines are aligned.

### Embodiment 8

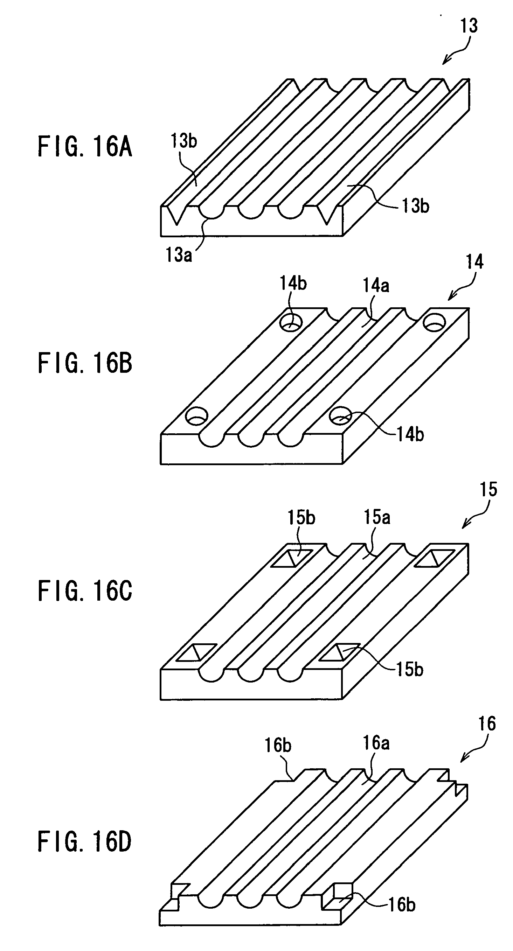

Embodiment 8 relates to a variety of different molds for molding an optical element array. The molds shown in FIG. 16 have a portion recessed in the depth direction of the groove-like component formed at locations flanking the region where the groove-like component (which forms the optically effective component) is formed.

The mold 13 shown in FIG. 16A has formed in it grooves with a substantially V-shaped cross section, and corresponds to the mold for forming the optical element array 29 shown in FIG. 14. The mold 14 shown in FIG. 16B has formed in it circular-bottomed concave components 14b adjacent to a groove-like component 14a for forming the optically effective component, and the concave components 14b are deeper than the groove-like component 14a.

The mold 15 shown in FIG. 16C has formed in it tetrahedral-bottomed concave components 15b adjacent to a groove-like component 15a for forming the optically effective component, and the concave components 15b are deeper than the groove-like component 15a.

The mold 16 shown in FIG. 16D has formed in it notches 16b (formed by cutting out a corner) adjacent to a groove-like component 16a for forming the optically effective component, and the notches 16b are deeper than the groove-like component 16a.

When these molds are used, the molded optical element material has convex components that are taller than the convex components serving as the optically effective component, so the optical element array can be cut without the optical function component coming into contact with the base, as in Embodiment 7 above.

### Embodiment 9

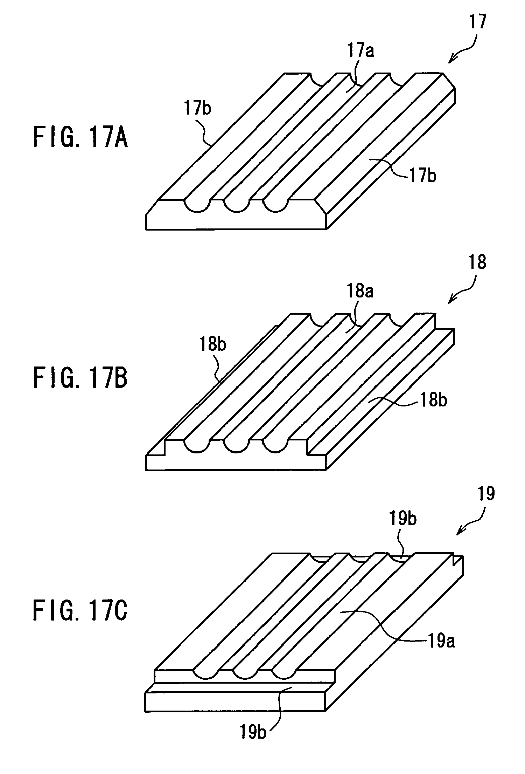

FIG. 17 includes perspective views of molds according to yet another embodiment. The molds shown in FIG. 17 have a portion recessed in the depth direction of the groove-like component formed at locations flanking the region where the groove-like component (which forms the optically effective component) is formed.

The mold 17 shown in FIG. 17A has formed in it inclined faces 17b on the sides of the region where a groove-like component 17a (corresponding to the optically effective component) is formed, and the inclined faces 17b are deeper than the groove-like component 17a.

The mold 18 shown in FIG. 17B has formed in it stepped portions 18b on the sides of the region where a groove-like component 18a (corresponding to the optically effective component) is formed, and the stepped portions 18b are deeper than the groove-like component 18a.

In the above mold examples, the groove-like component or concave component formed on the sides of the groove-like component corresponding to the optically effective component were formed along (parallel to) the axial direction of the groove-like component corresponding to the optically effective component, but instead may be formed perpendicular to the axial direction of the groove-like component. The mold 19 shown in FIG. 17C has formed in it stepped portions 19b perpendicular to the axial direction of a groove-like component 19b corresponding to the optically effective component, on the sides of the region where the groove-like component 19a is formed.

### Embodiment 10

Embodiment 10 relates to a method for forming pairs of optical elements by combining optical element arrays. FIG. 18A is a perspective view of the arrangement before the two optical element arrays have been put together. The optical element array 34 comprises a plurality of convex components 34a with a cylindrical face or non-cylindrical face. The optical element array 35 corresponds to the optical element array molded with the mold 19 shown in FIG. 17C.

The optical element array 35 comprises a plurality of convex components 35a with a cylindrical face or non-cylindrical face, and convex components 35b are formed at the ends in the axial direction (the direction of arrow a) of the convex components 35a. The convex components 35b are formed with their lengthwise direction perpendicular to the axial direction of the convex components 35a. The distal end position of the convex components 35b is higher than the distal end position of the convex components 35a.

Accordingly, in the state in FIG. 18A, the lower side of the optical element array 34 is bonded over the upper side (distal end side) of the convex components 35b of the optical element array 35 to produce an assembly, and this creates a gap of a specific distance between the distal ends of the convex components 35a and the lower side of the optical element array 34. Therefore, good precision in the space length between the optical element array 34 and the optical element array 35 is ensured in this state.

If this assembly then is held in a jig or the like and a plurality of cutters are used to cut the pair of optical element arrays 34 and 35 simultaneously at the locations indicated by broken lines in FIG. 18A, the result will be a plurality of optical element assemblies 36 in which the optical elements are joined together as shown in FIG. 18B.

Because this cutting, as discussed above, is performed in a state in which good precision is maintained in the space length between the optical element array 34 and the optical element array 35, and the convex components 35b are formed corresponding to the convex components 35a, there is no change in this state after cutting. This means that good precision is maintained in the space length of the assemblies 36 obtained by cutting.

In this embodiment, since the convex components 35b are molded integrally ahead of time at both ends of the optical element array 35, precise space length can be maintained easily merely by bonding the optical element array 35 to the convex components 35b. Furthermore, since the precision of the space length is maintained both before and after cutting, there is no need to adjust the precision of the space length individually for each cut optical element.

The assembly 36 was described using an example in which an assembly of optical element arrays was cut, but the optical elements that make up the assembly 36 may each be molded separately and then joined individually. Again with this method, the precision of the space length can be maintained easily merely by bonding the various optical elements.

With the construction in FIG. 18A, the effect will be the same if an indirect restriction member for forming a space length corresponding to the convex components 35b is bonded to the flat component of the optical element array 34 and this product then cut, rather than using the convex components 35b of the optical element array 35.

### Embodiment 11

Embodiments 11 to 18 relate to optical element arrays or optical elements, and are characterized by the shape thereof. The molding of these is performed using the pressing mold described in Embodiment 1, the details of which were described in Embodiment 1 and therefore will not be described again.

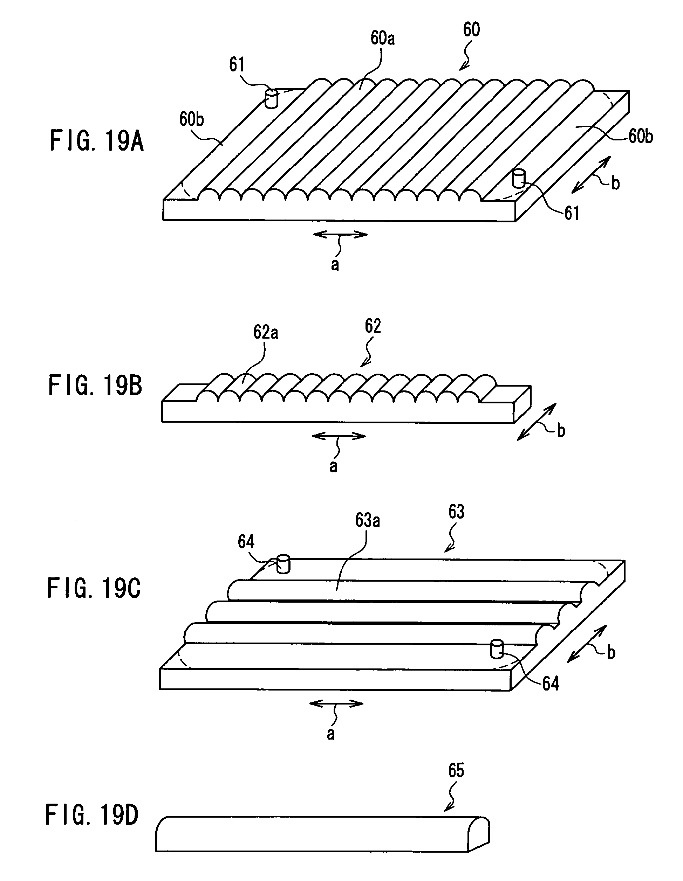

FIG. 19A is a perspective view of the molded optical element array according to Embodiment 11. With the optical element array 60 shown in this drawing, the optically effective component is formed by arranging numerous convex components 60a having a non-cylindrical face or cylindrical face in the direction of arrow a (perpendicular to the lengthwise direction of the convex components 60a). Extension components 60b extending from the optically effective component are molded integrally on both sides of the optically effective component.

A plurality of optical elements are obtained by cutting the optical element array 60 in the direction of arrow a at a specific width. The optical element 62 shown in FIG. 19B is one optical element obtained by cutting the optical element array 60 shown in FIG. 19A in the direction of arrow a at a specific width.

A pair of protrusions 61 are formed integrally with the optical element array 60 near two of the four corners of the optical element array 60, with these two corners being diagonally opposite each other. Specifically, the protrusions 61 are added integrally with the extension components 60b and separately from the extension components 60b. The protrusions 61 can be formed by forming concave components corresponding to the external shape of the protrusions 61 in the pressing mold used to mold the convex components 60a.

The corners of the optical element array 60 usually are rounded as indicated by the broken lines, so the positions of the concave components in the pressing mold corresponding to the protrusions 61 are set far enough in to allow for this.

The protrusions 61 can be used for positioning in the cutting of the optical element array 60. Specifically, when the protrusions 61 are engaged with a jig or other such fixing means, since the protrusions 61 are formed at diagonally opposite locations, the positioning can be performed without any movement in the lateral direction (direction of arrow a) or the longitudinal direction (direction of arrow b).

Also, since the protrusions 61 are formed at diagonal locations, the positioning portions including the protrusions 61 will not interfere with the cutters used to cut the optical element array 60 in the direction of arrow a.

Thus, when a plurality of cutters are used to cut the optical element array 60 in the direction of arrow a simultaneously in a state in which the protrusions 61 have been used for positioning, as shown in FIG. 19B, the result will be a plurality of optical elements 62 in which the perpendicularity of the axial direction (direction of arrow b) of the convex components 62a (cylindrical face) is maintained with respect to the lengthwise direction (direction of arrow a) of the side faces.

FIG. 19C is a perspective view according to another example of an optical element array. With the optical element array 63 shown in this drawing, numerous convex components 63a having a non-cylindrical face or cylindrical face are arranged in the direction of arrow b (perpendicular to the lengthwise direction of the convex components 63a). The optical element shown in FIG. 19D is the product of cutting the optical element array 63 shown in FIG. 19C in the direction of arrow a so as to include the convex component 63a serving as the optically effective component. Three optical elements 65 are obtained from the optical element array 63 shown in FIG. 19C.

Again with the optical element array 63 shown in this drawing, a pair of protrusions 64 are formed integrally with the optical element array 63 at two of the four corners, with these two corners being diagonally opposite each other. Accordingly, when the protrusions 64 are used for positioning, good precision can be maintained in the parallelism between the cutting direction (direction of arrow a) and the axial direction of the convex components 63a (cylindrical face). This means that if a plurality of cutters are used to simultaneously cut the optical element array 63 in the direction of arrow a, the optical elements shown in FIG. 19D can be obtained with good precision and without the cutting extending all the way to the convex components 63a.

### Embodiment 12

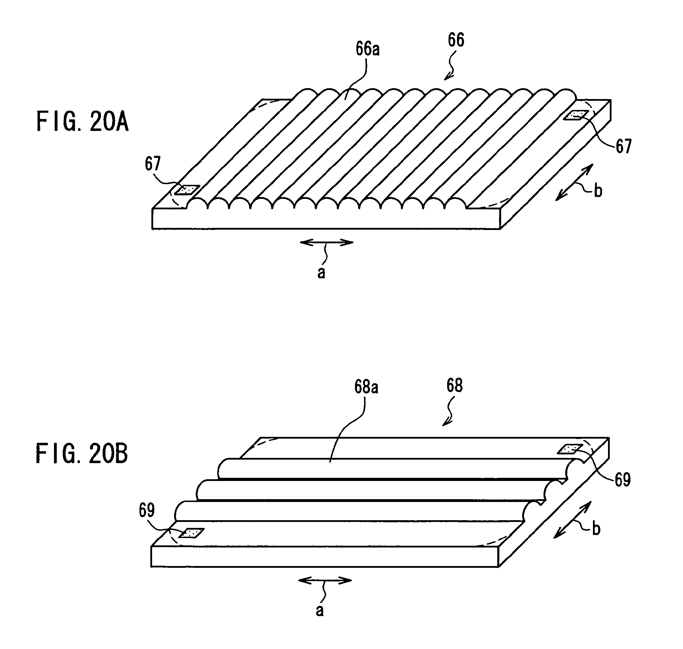

FIG. 20A is a perspective view of the molded optical element array according to Embodiment 12. The basic construction is the same as that of the optical element array 60 shown in FIG. 19A, but whereas the construction in FIG. 19A is equipped with positioning protrusions 61, the constitution of the optical element array 66 shown in FIG. 20A is instead equipped with rough surface regions 67.

The positions of the rough surface regions 67 are the same as the positions of the protrusions 61 in FIG. 19A, being at two of the four corners of the optical element array 66, with the two locations being diagonally opposite each other. The rough surface regions 67 can be obtained by forming rough faces whose surface roughness is higher than that of the portions corresponding to the convex components 66a on the pressing mold that forms the convex components 66a. If the corners of the optical element array 66 are to be rounded as indicated by the broken lines, then the positions of the rough surface regions 67 should be far enough in to allow for this, just as in

### Embodiment 11.

If the rough surface regions 67 are fixed in jig or other such fixing means, the fixing will be secure, and when the rough surface regions 67 are used for positioning and the optical element array 66 is simultaneously cut at a specific width with a plurality of cutters in the direction of arrow a, the result is a plurality of optical elements 62 as shown in FIG. 19B.

FIG. 20B is a perspective view of another example of a molded optical element array. The basic construction of the optical element array 68 shown in this drawing is the same as that of the optical element array 63 shown in FIG. 19C, but rough surface regions 69 are formed instead of the positioning protrusions 64. The rough surface regions 69 can be used for positioning just as with the construction in FIG. 20A, and when the rough surface regions are used for positioning and the optical element array is simultaneously cut with a plurality of cutters along the convex components 68A in the direction of arrow a, the result is a plurality of optical elements 65 as shown in FIG. 19D.

### Embodiment 13

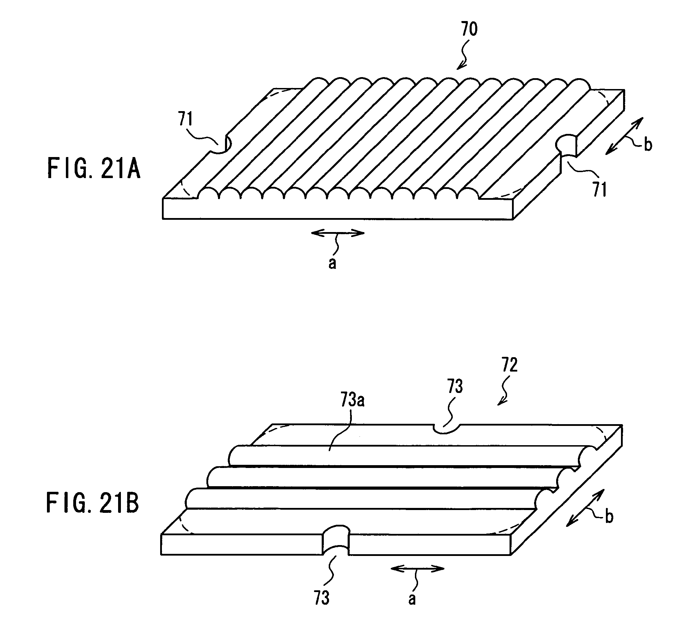

FIG. 21A is a perspective view of the molded optical element array according to Embodiment 13. The basic construction is the same as that of the optical element array 60 shown in FIG. 19A, but whereas the construction in FIG. 19A is equipped with positioning protrusions 61, with the optical element array 70 in FIG. 21A, notches 71 are formed instead. The notches 71 are formed on two opposing sides. The notches 71 can be formed by providing convex components corresponding to the shape of the notches 71 in one or both halves of the pressing mold pair.

When the protrusions of a jig or other fixing means corresponding to the shape of the notches 71 are engaged with the notches 71, the positioning can be performed without any movement in the lateral direction (direction of arrow a) or the longitudinal direction (direction of arrow b). In this state, when a plurality of cutters are simultaneously used to cut the optical element array 70 at a specific width in the direction of arrow a, the result is the optical elements 62 shown in FIG. 19B.

FIG. 21B is a perspective view of another example of the molded optical element array. The basic construction is the same as that of the optical element array 63 shown in FIG. 19C, but whereas the construction in FIG. 19C is equipped with positioning protrusions 64, the optical element array 72 shown in FIG. 21B is instead equipped with notches 73. The description of the notches 73 is the same as that of FIG. 21A.

When the notches 73 are used for positioning and the optical element array 72 is simultaneously cut with a plurality of cutters along the convex components 73a in the direction of arrow a, the result is a plurality of optical elements 65 as shown in FIG. 19D.

### Embodiment 14

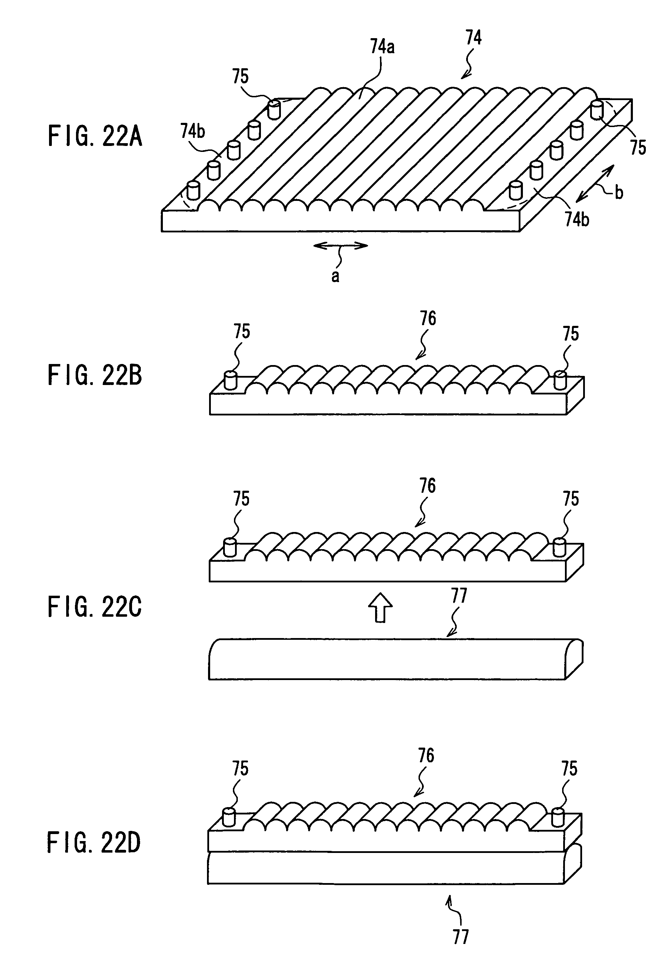

FIG. 22A is a perspective view of the molded optical element array according to Embodiment 14. Except for the disposition of protrusions 75, the basic construction is the same as that of the optical element array 60 shown in FIG. 19A. The optical element array 74 shown in this drawing comprises a plurality of protrusions 75 formed on extension components 74b extending from both sides of the optically effective component and on which convex components 74a are formed. The protrusions 75 are formed in a row. The protrusions 75 on one of the pair of extension components 74b correspond to protrusions 75 on the other extension component 74b. One protrusion on the left and one on the right form a pair, and a plurality of such pairs are formed.

Positioning during cutting can be performed using a pair of the protrusions 75 in diagonally opposite locations, just as in Embodiment 11. When the protrusions 75 are used for positioning and the optical element array 74 is simultaneously cut at a specific width with a plurality of cutters in the direction of arrow a, the result is a plurality of optical elements. FIG. 22B is a perspective view of the optical element obtained by cutting. The optical element 76 shown in this drawing includes a pair of left and right protrusions 75.

FIG. 22C is a perspective view of how the optical element 76 is combined with another optical element 77 in the manufacture of a light source unit, and FIG. 22D is a perspective view of the state when the positional adjustment between the optical element 76 and the optical element 77 has been completed. Since the optical element 76 is equipped with the protrusions 75, when the optical element 77 that is to be combined has been fixed, and the protrusions 75 have been fixed by a jig or other fixing means that allows movement adjustment, the relative positions between the optical element 76 and the optical element 77 can be adjusted by moving the optical element 76 to the optical element 77.

After positional adjustment, the optical element 76 and the optical element 77 are fixed via a separate support plate or the like, and this assembly is attached to a light source substrate.

Specifically, with this embodiment, because the protrusions 75 can be used for positioning during cutting, and the protrusions 75 remain after cutting, these protrusions 75 can be used for positional adjustment of the optical element 76 in the manufacture of a light source unit.

### Embodiment 15

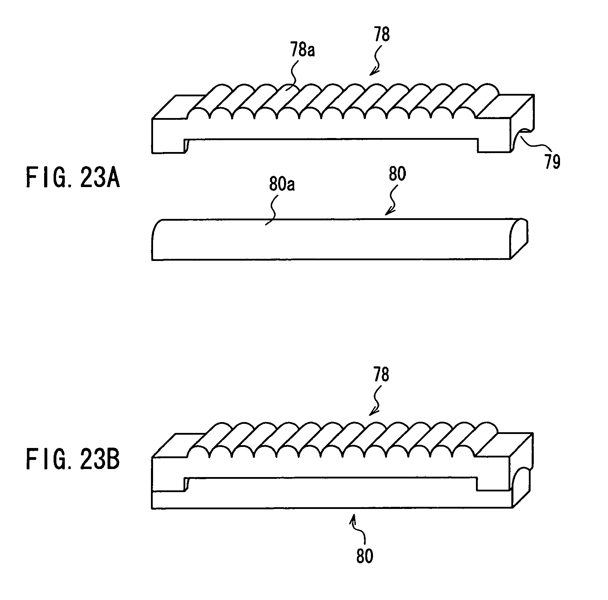

FIG. 23A is a perspective view of how optical elements are combined in the manufacture of a light source unit. The optical element 78 shown in this drawing comprises concave components 79 formed on the opposite side from the side on which are formed convex components 78a having a cylindrical face or non-cylindrical face. The shape of the concave components 79 corresponds to the shape of convex components 80a with a cylindrical face or non-cylindrical face of an optical element 80 that is to be combined. This shape can be molded by forming convex shapes corresponding to the shape of the concave components 79 on the opposite pressing mold from the pressing mold corresponding to the convex components 78a out of the pair of pressing molds.

FIG. 23B is a perspective view of the state when the optical element 78 and the optical element 80 have been combined. The shape of the concave components 79 of the optical element 78 corresponds to the convex components 80a of the optical element 80, so once the concave components 79 are engaged with the convex components 80a, the positional adjustment between the optical element 78 and the optical element 80 is complete. If the concave components 79 and/or the convex components 80a are coated ahead of time with an adhesive agent, then the optical element 78 and the optical element 80 can be joined together simultaneously with the positional adjustment. After the joining of the optical element 78 and the optical element 80, this assembly is attached to a light source substrate via a separate support plate or the like.

### Embodiment 16

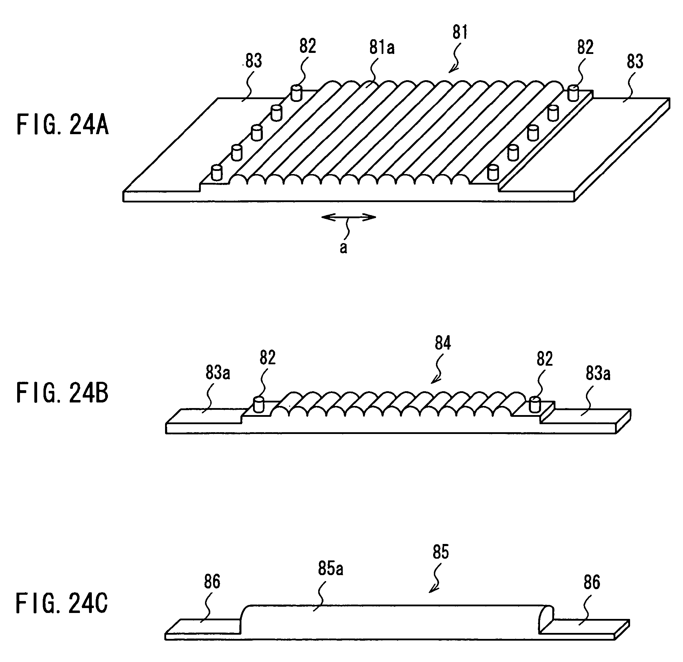

FIG. 24A is a perspective view of the molded optical element array according to Embodiment 16. The construction of the main portions of the optical element array 81 shown in this drawing is the same as that of the optical element array 74 shown in FIG. 22A. The optical element array 81 further comprises heat radiating components 83 formed adjacent to the region where the protrusions 82 are formed in a row, extending so as to increase the width of the optical element array 81. The heat radiating components 83 are in the form of flat plates and enhance the heat-radiating effect, so they are made thinner than the optically effective component where the convex components 81a are formed.

Just as in Embodiment 14, a plurality of optical elements 84 such as that shown in FIG. 24B can be obtained by using a plurality of cutters to simultaneously cut the optical element array 81 at a specific width in the direction of arrow a. FIG. 24B is a perspective view of an optical element after cutting. The optical element 84 shown in this drawing is obtained by cutting so as to include a pair of left and right protrusions 82. The optical element 84 comprises flat heat radiating components 83a formed adjacent to the region where the protrusions 82 are formed. When an optical element is used in a semiconductor laser device, the optical element becomes quite hot through the transmission of laser light, but the optical element 84 according to this embodiment radiates heat very well because it is equipped with the heat radiating components 83a.

The description of FIGS. 24A and 24B was premised on a construction having the protrusions 83, but the construction instead may be one in which there is no region in which protrusions are formed, and there are heat radiating components extending directly from the optically effective component where the convex components 81a are formed.

FIG. 24C is a perspective view of an optical element according to another example. The optical element 85 shown in this drawing comprises flat heat radiating components 86 formed adjacent to the optically effective component where the convex components 85a are formed. The optical element 85 shown in this drawing is obtained by molding an optical element array in which flat heat radiating components extend from the optical element array 63 shown in FIG. 19C, and then using a plurality of cutters to simultaneously cut this in the direction of arrow a. The heat-radiating effect is excellent just as with the construction in FIG. 24B.

### Embodiment 17

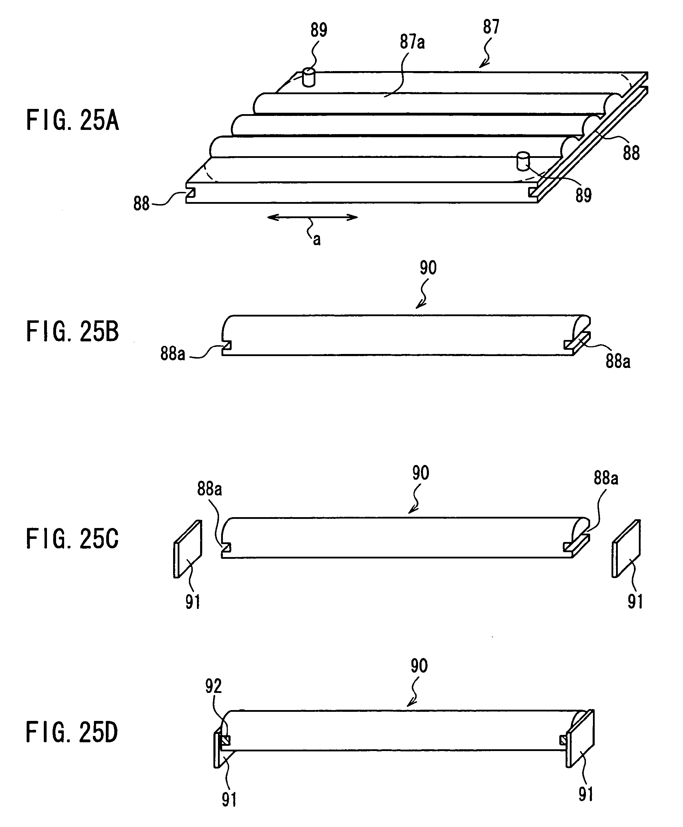

FIG. 25A is a perspective view of the optical element array according to Embodiment 17. The optical element array 87 shown in this drawing comprises grooves 88 formed on the side faces. The grooves 88 are formed on the side faces of the optical element array 87, that is, the faces substantially perpendicular to the face where the convex components 87a (the optically effective component) are formed, so as to extend in the lengthwise direction of these faces. The grooves 88 do not allow the array to be removed with just a mold that opens in the up and down direction as in FIGS. 1 and 2, so that a mold that opens laterally should be added.

Just as in Embodiment 11, when the protrusions 89 are used for positioning and the optical element array 87 is simultaneously cut along the convex components 87a with a plurality of cutters in the direction of arrow a, the result is a plurality of optical elements as shown in FIG. 25B. FIG. 25B is a perspective view of the optical element after cutting. The optical element 90 shown in this drawing is equipped with left and right grooves 88a.

FIG. 25C is a perspective view of the state prior to the bonding of the optical element 90 and plates 91 (plate members), and FIG. 25D is a perspective view of the state after the bonding of the optical element 90 and the plates 91. The grooves 88a can be used as reservoirs for the adhesive material. Accordingly, if the grooves 88a are filled with an adhesive material 92 (the hatched portions in FIG. 25D), the plates 91 easily can be bonded to the optical element 90.

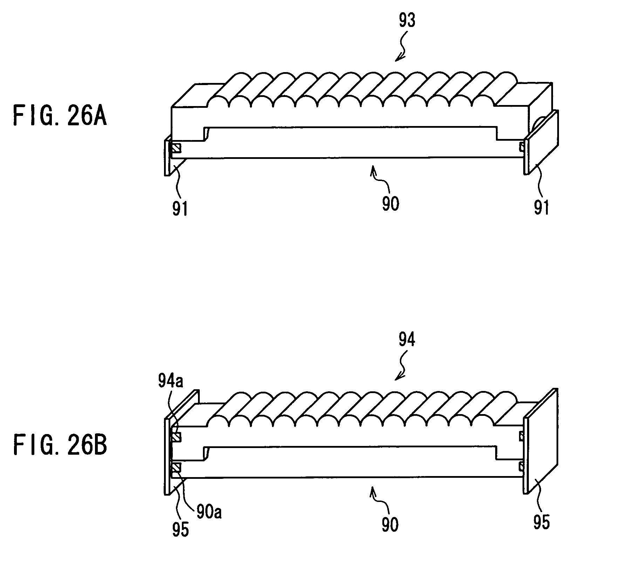

FIG. 26A shows the state when another optical element 93 has been joined to the optical element 90 that has been joined with the plates 91 in FIG. 25D. If the plates 91 are joined to a light source substrate in this state, the assembly of the optical element 90 and the optical element 93 can be fixed to the light source substrate. The plates 91 can be utilized as fixing members, and also provide a heat-radiating effect.

FIG. 26B is a perspective view of another example of an optical element assembly. In the example in this drawing, grooves 94a are formed in an optical element 94 that is to be combined with the optical element 90. With this construction, the optical elements 90 and 94 are joined via plates 95 (plate members), so there is no need for coating with an adhesive material between lenses. The heat-radiating effect is the same as in the example in FIG. 26A.

In the example shown in FIG. 25D, plates 91 that had been formed separately from the optical element 90 were joined with this optical element, but the pressing mold may be designed to produce a shape in which the shape corresponding to the plates 91 is integral.

In Embodiments 11 to 17 above, the description was of a method for obtaining optical elements by cutting an optical element array, but the press molding described in Embodiment 1 may be used to mold individual optical elements directly as well.

### Embodiment 18

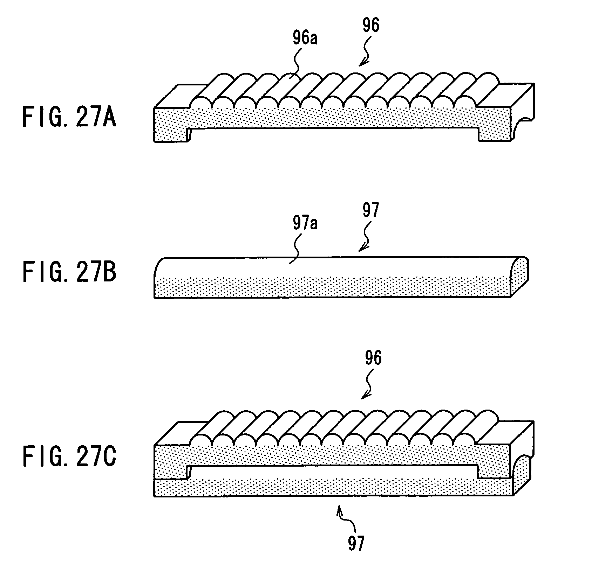

FIG. 27A is a perspective view of the optical element array according to Embodiment 18. The optical element 96 shown in this drawing has side faces whose surface roughness is greater (shaded portion) than that of the optically effective component where convex components 96a are formed. FIG. 27B is a perspective view of an optical element according to another example. The optical element 97 shown in this drawing also has side faces whose surface roughness is greater (shaded portion) than that of the optically effective component where convex components 97a are formed. This surface roughening can be accomplished by forming a rough surface on the corresponding mold.

FIG. 27C is a perspective view of the state when the optical element 96 and the optical element 97 have been joined. Since the side faces have been roughened, the problem of stray light is handled by preventing unnecessary light from being incident on the optical elements.

The descriptions in Embodiments 11 to 18 above were premised on the optical element arrays or optical elements being produced by the press molding described in Embodiment 1, but since the characteristic feature of these lies in the shape itself after molding, production is not limited to press molding.

### Industrial Applicability

As discussed above, with the present invention, an optical element with stable surface shape precision can be obtained, which is advantageous in terms of both productivity and cost, and which also makes positioning easier. Accordingly, the present invention is useful for glass optical elements used in semiconductor laser devices, for example, and methods for manufacturing the same.

## Claims

1. A method for manufacturing an optical element for a semiconductor laser device, comprising a step of press molding an optical element material disposed between a pair of pressing molds,
wherein at least one pressing mold out of the pair is formed with a groove-like component that forms a non-cylindrical face or a cylindrical face as an optically effective component in the optical element material.

2. The method for manufacturing an optical element for a semiconductor laser device according to Claim 1, wherein the groove-like component comprises a plurality of rows.

3. The method for manufacturing an optical element for a semiconductor laser device according to Claim 1, wherein the groove-like component comprises a plurality of rows, and these rows are disposed equidistantly.

4. The method for manufacturing an optical element for a semiconductor laser device according to Claim 1, further comprising a cutting step in which the molded optical element material is cut into a plurality of optical elements after the molded optical element material has been vapor deposited.

5. The method for manufacturing an optical element for a semiconductor laser device according to Claim 4, wherein the vapor deposition extends to a portion other than the optically effective component.

6. The method for manufacturing an optical element for a semiconductor laser device according to Claim 1, further comprising a cutting step in which the molded optical element material is cut into a plurality of optical elements, the pressing mold in which the groove-like component is formed having a flat component formed adjacent to the groove-like component, and
in the cutting step, the molded optical element material is cut so as to leave behind the portion corresponding to the flat component.

7. The method for manufacturing an optical element for a semiconductor laser device according to Claim 1, wherein the pressing mold in which the groove-like component is formed has a flat component formed adjacent to the groove-like component, a material having a light-blocking effect and/or a heat-radiating effect is added to the flat component before the optical element material is pressed, and the added material is transferred to the optical element material during the pressing of the optical element material.

8. The method for manufacturing an optical element for a semiconductor laser device according to Claim 7, wherein the material added to the flat component is at least one material selected from among carbon, graphite, and graphite sheet.

9. The method for manufacturing an optical element for a semiconductor laser device according to Claim 1, wherein the pressing mold in which the groove-like component is formed has a flat component formed adjacent to the groove-like component, and the surface roughness of the flat component is made greater than the surface roughness of the groove-like component so that, of the molded optical element material, the portion corresponding to the flat component will have an optical light-blocking effect.

10. An optical element for a semiconductor laser device, comprising a non-cylindrical face or a cylindrical face as an optically effective component, wherein the optical element is obtained by press molding an optical element material disposed between a pair of pressing molds, and the non-cylindrical face or cylindrical face is formed by a groove-like component formed in at least one pressing mold out of the pair.

11. The optical element for a semiconductor laser device according to Claim 10, comprising a flat component adjacent to the non-cylindrical face or cylindrical face.

12. The optical element for a semiconductor laser device according to Claim 11, wherein a material having a light-blocking effect and/or a heat-radiating effect is added to the flat component.

13. The optical element for a semiconductor laser device according to Claim 12, wherein the material added to the flat component is at least one material selected from among carbon, graphite, and graphite sheet.

14. The optical element for a semiconductor laser device according to Claim 11, wherein the surface roughness of the flat component is made greater than the surface roughness of the non-cylindrical face or cylindrical face so that the flat component has a light-blocking effect.

15. A method for manufacturing an optical element, comprising a step of press molding an optical element material disposed between a pair of pressing molds,
wherein at least one pressing mold out of the pair is formed with a groove-like component that forms a non-cylindrical face or a cylindrical face as an optically effective component in the optical element material, and
portions that are concave in the depth direction of the groove-like component are formed at locations flanking the region where the groove-like component is formed.

16. The method for manufacturing an optical element according to Claim 15, wherein a plurality of the groove-like components are arranged at a specific pitch.

17. The method for manufacturing an optical element according to Claim 15, wherein the concave portions are arranged so as to be either parallel or perpendicular to the axial direction of the groove-like component.

18. The method for manufacturing an optical element according to Claim 15, wherein the concave portions are formed with ridgelines formed by intersecting planes.

19. The method for manufacturing an optical element according to Claim 15, wherein the concave portions are deeper than the groove-like component.

20. The method for manufacturing an optical element according to Claim 15, further comprising a cutting step in which the molded optical element material is cut into a plurality of optical elements,
wherein the cutting step is performed with the molded optical element material disposed on a base,
the concave portions are deeper than the groove-like component, and
of the molded optical element material, a convex component formed corresponding to the concave portion is brought into contact with the base, a space is provided between the base and the non-cylindrical face or cylindrical face formed corresponding to the groove-like component, and the cutting is performed in this state.

21. The method for manufacturing an optical element according to Claim 15, further comprising a cutting step in which the molded optical element material is cut into a plurality of optical elements,
wherein the concave portions are formed with ridgelines formed by intersecting planes, and
the ridgelines are used as a reference for positional adjustment in the cutting.

22. The method for manufacturing an optical element according to Claim 15, further comprising a cutting step for cutting an assembly of a first optical element material as the molded optical element material, and a second optical element material,
wherein the concave portion is deeper than the groove-like component, and
of the molded optical element material, a convex component formed corresponding to the concave portion is joined to the second optical element material, a space is provided between the second optical element material and the non-cylindrical face or cylindrical face formed as the optically effective component corresponding to the groove-like component, and the cutting is performed in this state.

23. An optical element for a semiconductor laser convergence, formed by cutting an optical element material formed by the method for manufacturing an optical element according to Claim 15,
wherein the surface roughness of the cut face produced by the cutting is greater than the surface roughness of the non-cylindrical face or cylindrical face serving as the optically effective component.

24. An optical element array in which a plurality of optical elements are formed integrally, wherein an optically effective component on which a non-cylindrical face or a cylindrical face is formed, an extension component extending from the optically effective component, and a positioning component formed on the extension component and capable of positioning the optical element array are formed integrally.

25. The optical element array according to Claim 24, wherein the positioning component is formed in at least one pair of diagonal positions of the two pairs of diagonal positions of the optical element array.

26. The optical element array according to Claim 24, wherein the positioning component is a protrusion protruding from the extension component.

27. The optical element array according to Claim 24, wherein the positioning component is a rough face whose surface roughness is greater than that of the non-cylindrical face or cylindrical face.

28. The optical element array according to Claim 24, wherein the positioning component is a notch obtained by notching the extension component.

29. The optical element array according to Claim 24, wherein a row of protrusions formed from a plurality of protrusions is formed on the extension component, and the positioning component is at least part of the plurality of protrusions.

30. The optical element array according to Claim 24, wherein a heat radiating component extending so as to increase the width of the optical element array is further formed adjacent to the extension component.

31. The optical element array according to Claim 24, wherein the positioning component is formed on a face on the opposite side from the face where the non-cylindrical face or cylindrical face is formed, and the inner face is a plurality of concave components corresponding to a non-cylindrical face or a cylindrical face.

32. An optical element array in which a plurality of optical elements are formed integrally, comprising an optically effective component on which a non-cylindrical face or a cylindrical face is formed, and a groove formed on a face substantially perpendicular to the face where the optically effective component is formed and extending in the lengthwise direction of said substantially perpendicular face.

33. An optical element comprising a non-cylindrical face or a cylindrical face as an optically effective component, wherein an extension component extending from the optically effective component and a positioning component formed on the extension component and capable of positioning the optical element are formed integrally.

34. The optical element according to Claim 33, wherein the positioning component is a protrusion protruding from the extension component.

35. The optical element according to Claim 33, wherein the positioning component is a rough face whose surface roughness is greater than that of the non-cylindrical face or cylindrical face.

36. The optical element according to Claim 33, wherein a heat radiating component extending so as to increase the width of the optical element is further formed adjacent to the extension component.

37. An optical element, wherein an optically effective component on which a non-cylindrical face or a cylindrical face is formed and a heat radiating component extending form the optically effective component are formed integrally.

38. The optical element according to Claim 37, wherein the heat radiating component is thinner than the optically effective component.

39. An optical element in which the portion other than an optically effective component is a rough face whose surface roughness is greater than that of the optically effective component.

40. The method for manufacturing an optical element array according to Claim 24 or 32, wherein the optical element array is molded by pressing an optical element material disposed between a pair of pressing molds.

41. The method for manufacturing an optical element according to Claim 33, 37, or 39, wherein the optical element is molded by pressing an optical element material disposed between a pair of pressing molds.

42. A method for manufacturing an optical element featuring the optical element array according to Claim 24 or 32, wherein the positioning component is used to position the optical element array, after which the optical element array is cut into a plurality of optical elements each including the non-cylindrical face or cylindrical face.

43. A method for manufacturing a light source unit, wherein a plurality of optical elements are produced by cutting the optical element array according to Claim 24 so that each includes the optically effective component and the positioning component, and
the positioning components of the optical elements obtained by the cutting are used to position other combined optical elements.

44. The method for manufacturing a light source unit according to Claim 43, wherein the positioning component is formed on a face on the opposite side from the face where the non-cylindrical face or cylindrical face is formed, and the inner face is a plurality of concave components corresponding to a non-cylindrical face or a cylindrical face, and positioning with other combined optical elements is performed by combining the concave components on a non-cylindrical face or a cylindrical face of the other optical elements.

45. A method for manufacturing a light source unit, wherein a plurality of optical elements are produced by cutting the optical element array according to Claim 32 so that each includes the optically effective component and the groove, and
the grooves are filled with an adhesive material to bond plate members at the positions of the grooves, and these plate members are used for joining with other combined optical elements and/or for joining with a light source component.
